(19) Europäisches Patentamt
European Patent Office
Office européen des brevets

(11) **EP 2 999 273 A1**

(12) **EUROPEAN PATENT APPLICATION**

(43) Date of publication:
**23.03.2016 Bulletin 2016/12**

(51) Int Cl.:
**H04W 48/20** (2009.01)   **H04W 88/06** (2009.01)

(21) Application number: **15184898.3**

(22) Date of filing: **11.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **16.09.2014 JP 2014188194**

(71) Applicant: **FUJITSU LIMITED**
**Kawasaki-shi,**
**Kanagawa 211-8588 (JP)**

(72) Inventor: **SUGA, Junichi**
**Kawasaki-shi, Kanagawa 211-8588 (JP)**

(74) Representative: **Ward, James Norman**
**Haseltine Lake LLP**
**Lincoln House, 5th Floor**
**300 High Holborn**
**London WC1V 7JH (GB)**

(54) **ESTIMATION OF RECEPTION DATA RATE BY A WIRELESS TERMINAL BASED ON RECEPTION ERROR DETERMINED ON RECEIVED RADIO FRAMES TRANSMITTED FROM A WIRELESS BASE STATION TO ANOTHER WIRELESS TERMINAL**

(57) A wireless terminal apparatus including: a control processing unit configured to: when the wireless terminal has not established a connection to a wireless base station, receive at least one radio frame that is transmitted from the wireless base station to another wireless terminal, and estimate a specified parameter indicating a reception data rate on an assumption that the wireless terminal has established a connection to the wireless base station, based on whether each of the at least one radio frame includes a reception error.

## FIG. 4

**Description**

FIELD

The embodiments discussed herein are related to a wireless terminal apparatus, and a method of measuring a data reception speed.

BACKGROUND

Advances in hardware and software in recent years have brought about wireless terminal apparatuses incorporating wireless communication modules of a wireless Local Area Network (LAN) in addition to wireless communication modules of a cellular method. Examples of the cellular method include Code Division Multiple Access (CDMA), Long Term Evolution (LTE), and the like. Examples of the wireless LAN include the wireless standards standardized by the Institute of Electrical and Electronics Engineers (IEEE) 802.11 Project. Examples of the wireless terminal apparatus include a multifunctional mobile telephone called a smartphone, a portable computer called a tablet personal computer (PC), and the like. When such a wireless terminal apparatus establishes connection to an access point in a wireless LAN, and communicates with the connected access point in the wireless LAN, for example, the following process is performed. The access point in the wireless LAN is a wireless base station apparatus in the wireless LAN. In the following statement, an "access point" indicates an access point in a wireless LAN, in other words, a wireless base station apparatus in the wireless LAN.

A service set identifier (SSID), which is identification information on the access point, and an authentication key are registered in advance in the wireless terminal apparatus. In a state where a wireless LAN switch included in the wireless terminal apparatus is ON, when the wireless terminal apparatus moves into a communication area of an access point adapted to the SSID that is registered in advance in the wireless terminal apparatus, the wireless terminal apparatus receives a beacon signal transmitted from the access point. Alternatively, in a state where the wireless LAN switch is ON, the wireless terminal apparatus transmits a probe request signal toward the access point adapted to the SSID that is registered in advance, and receives a probe response signal corresponding to the transmitted probe request signal from the access point. Hereinafter, unless a particular statement of distinguishing a beacon signal from a probe response signal is made, the beacon signal and the probe response signal are collectively described as a "beacon signal".

The wireless terminal apparatus measures a Received Signal Strength Indicator (RSSI), which is a received strength of the received beacon signal. When a value of the measured RSSI is not less than a predetermined threshold (for example, -80 dBm), the wireless terminal apparatus determines that connection to an access point having transmitted the beacon signal is possible, and attempts to establish connection to the access point. When the processes of authentication and association are performed between the wireless terminal apparatus and the access point, the wireless terminal apparatus establishes connection to the access point.

When the wireless terminal apparatus establishes connection to the access point, desired data is communicated between the wireless terminal apparatus and the access point. The data rate of data communicated between the wireless terminal apparatus and the access point is adaptively changed due to change in a modulation and coding scheme (MCS) with respect to the data in accordance with the wireless quality of data signals between the access point and the wireless terminal apparatus. The MCS is a combination of a modulation scheme and an error correction coding rate that are applied to data communicated between the access point and the wireless terminal apparatus.

For example, when a wireless terminal apparatus establishes connection to an access point, data transmission from the access point to the wireless terminal apparatus starts. The access point firstly uses a first MCS adaptable to a relatively low wireless quality, in other words, an MCS at a relatively low bit rate, to transmit data to the wireless terminal apparatus at a relatively low first data rate. When the wireless terminal apparatus receives the data transmitted at the first data rate without any error, the access point then uses a second MCS adapted to a relatively high wireless quality, in other words, an MCS at a relatively high bit rate, to transmit data to the wireless terminal apparatus at a relatively high second data rate. In other words, the access point uses the MCS at the relatively high bit rate to transmit data to the wireless terminal apparatus. When the wireless terminal apparatus receives the data transmitted at the second data rate without any error, the access point then uses a third MCS adapted to a relatively higher wireless quality to transmit data to the wireless terminal apparatus at a relatively higher third data rate. In other words, the access point uses the MCS at the relatively higher bit rate to transmit data to the wireless terminal apparatus. In this manner, the data rate of the data communicated between the access point and the wireless terminal apparatus may be stepwisely raised depending on the wireless quality of a data signal communicated between the access point and the wireless terminal apparatus, after the communication between the access point and the wireless terminal apparatus has started.

Meanwhile, for example, may occur a case where during the continuous transmission of data from the access point to the wireless terminal apparatus, the wireless terminal apparatus does not receive the data transmitted at the third data rate due to change in the wireless environment or the like. When such a case occurs, the access point firstly uses the second MCS to transmit data to the wireless terminal apparatus at the second data rate. In other words, the access point uses the MCS at the relatively low bit rate to transmit data to the wireless terminal apparatus. When the wireless terminal apparatus does not receive the data transmitted at the second data rate, the access point then uses the first MCS to transmit data to the wireless terminal apparatus at the first data rate. In other words, the access point uses the MCS at the relatively lower bit rate to transmit data to the wireless terminal apparatus. In this manner, the data rate of the data communicated between the access point and the wireless terminal apparatus may be stepwisely lowered depending on the wireless quality of the data signal communicated between the access point and the wireless terminal apparatus after the communication between the access point and the wireless terminal apparatus has started.

A communication control program below is known. In other words, the communication control program makes a wireless interface execute processing of SSID unspecified probe, and acquires intensities of reception waves from all of access points that return SSIDs. The communication control program reads out profiles having SSIDs stored therein, in the order of priority, and establishes connection to an access point the reception wave intensity of which exceeds a threshold, out of the access points specified by the SSIDs.

A method below of operations in a wireless station is known. In other words, the method includes processes below. A station wirelessly receives a signal from a remote station, the signal corresponding to a packet transmitted from the remote station. A sampled value of the reception signal is demodulated to create a demodulate signal from the remote station. Whether to communicate with the remote station is selected based on the reception signal quality (for example, error vector magnitude (EVM) of the reception signal) of data that is transferred through a link between the station and the remote station.

A method below that executes a link adaptation procedure for multi-user transmission in a wireless LAN system is known. In other words, the method includes steps below: receiving an MCS feedback request transmitted by an access point (AP) to multiple stations; estimating an MCS by considering a spatial stream corresponding to the MCS feedback request transmitted to the other stations; and transmitting an MCS feedback response including the estimated MCS to the AP.

A wireless communication system is known. In other words, wireless LAN base station apparatuses monitored by a wireless LAN base station monitoring server apparatus respectively notify the wireless LAN base station monitoring server apparatus of wireless LAN base station information on themselves. A combined wireless terminal apparatus that is to start communication requests wireless LAN base station information on connectable wireless LAN base station apparatuses. The wireless LAN base station monitoring server apparatus notifies the combined wireless terminal apparatus of the presence or absence of any connectable wireless LAN base station, and if any, information on the connectable wireless LAN base station, based on the information acquired from the combined wireless terminal apparatus having requested the information, via a 3G network. The combined wireless terminal apparatus having received the wireless LAN base station information determines whether to establish connection to a wireless LAN network from the wireless LAN base station information.

Such conventional technologies are disclosed in Japanese Laid-open Patent Publication No. 2005-39571, Japanese National Publication of International Patent Application No. 2007-510358, Japanese National Publication of International Patent Application No. 2012-531793, and International Publication Pamphlet No. WO 2008/020536, for example.

SUMMARY

THCHNICAL PROBLEM

The problem to be solved by the disclosure is to allow a wireless terminal apparatus to measure the data reception speed that is acquired when the wireless terminal apparatus receives data from a wireless base station apparatus before the wireless terminal apparatus establishes connection to the wireless base station apparatus.

SOLUTION TO PROBLEM

According to an aspect of the invention, a wireless terminal apparatus includes a control processing unit configured to: when the wireless terminal has not established a connection to a wireless base station, receive at least one radio frame that is transmitted from the wireless base station to another wireless terminal, and estimate a specified parameter indicating a reception data rate on an assumption that the wireless terminal has established a connection to the wireless base station, based on whether each of the at least one radio frame includes a reception error.

ADVANTAGEOUS EFFECTS

The advantageous effect of the disclosure is to allow a wireless terminal apparatus to measure the data reception speed that is acquired when the wireless terminal apparatus receives data from a wireless base station apparatus before the wireless terminal apparatus establishes connection to the wireless base station apparatus.

BRIEF DESCRIPTION OF DRAWINGS

FIG. 1 is an exemplary configuration diagram of a wireless communication system including wireless terminal apparatuses according to a first embodiment;
FIG. 2 is an exemplary functional block diagram of the wireless terminal apparatus according to the first embodiment;
FIG. 3 is an exemplary hardware block diagram of the wireless terminal apparatus according to the first embodiment;
FIG. 4 is an explanation diagram of data reception by the wireless terminal apparatus according to the first embodiment;
FIG. 5 is an example diagram of a format of a data frame that is transmitted and received between a first wireless base station apparatus and a wireless terminal apparatus having already been connected to the first wireless base station apparatus;
FIG. 6 is an example view of a reception result record table;
FIG. 7A is an exemplary flowchart of data frame reception processing performed by the wireless terminal apparatus according to the first embodiment;
FIG. 7B is an exemplary flowchart of the data frame reception processing performed by the wireless terminal apparatus according to the first embodiment;
FIG. 8 is an exemplary flowchart of wireless scheme specifying processing performed by the wireless terminal apparatus according to the first embodiment;
FIG. 9A is an exemplary flowchart of data frame reception processing performed by a wireless terminal apparatus according to a second embodiment;
FIG. 9B is an exemplary flowchart of the data frame reception processing performed by the wireless terminal apparatus according to the second embodiment; and
FIG. 10 is an exemplary functional block diagram of a wireless terminal apparatus according to a third embodiment.

DESCRIPTION OF EMBODIMENTS

Hereinafter, preferred embodiments will be described in details with reference to the drawings.

<First Embodiment>

A value of RSSI of a beacon signal measured by a wireless terminal apparatus is merely the reception intensity of the beacon signal transmitted from an access point. Accordingly, the measured value of RSSI of the beacon signal does not naturally reflect the wireless quality of a signal communicated between the access point and the wireless terminal apparatus. For example, there is a case where a different access point other than a certain access point is present, and a signal transmitted from the different access point may interfere with a signal transmitted from the certain access point. However, the value of RSSI that is measured by the wireless terminal apparatus with respect to the beacon signal transmitted from the certain access point does not change independent of the presence or absence of such a case. This may generate a situation of the low wireless quality of a signal transmitted from the certain access point due to the interference by a signal transmitted from the different access point even if the measured value of RSSI of the beacon signal is not less than a predetermined threshold. In recent years, access points are installed in airports, stations, coffee shops, and the like, and the installation number of access points is increasing. This may generate a situation of the deteriorated wireless quality of a signal transmitted from a specific access point due to the mutual interference of signals transmitted from multiple access points.
As described in the foregoing, in a wireless LAN, an MCS that is applied to data communicated between the wireless terminal apparatus and the access point is adaptively changed depending on a transmission situation of the data after the wireless terminal apparatus establishes connection to the access point. For example, the low wireless quality of a data signal communicated between the wireless terminal apparatus and the access point generates an error in the data on a wireless transmission channel. Therefore, an MCS that copes with an error of data, in other words, an MCS that is adapted to the low data rate is applied to data of a data signal with the low wireless quality. Accordingly, when a wireless terminal apparatus establishes connection to an access point in a situation of the low wireless quality of a data signal communicated between the wireless terminal apparatus and the access point, the wireless terminal apparatus may acquire a small user throughput after having established connection to the access point. Therefore, even if the wireless terminal apparatus establishes connection to an access point based on the measured value of RSSI of a beacon signal, there is a possibility that the wireless terminal apparatus may not acquire a desired throughput when receiving data from the connected (or coupled) access point.

In view of this, a wireless terminal apparatus according to a first embodiment is configured to measure the data reception speed when the wireless terminal apparatus receives data from the connected access point, before the wireless terminal apparatus establishes connection to the access point. Such a configuration allows the wireless terminal apparatus according to the first embodiment, for example, to determine whether a desired data reception speed may be acquired after having established connection to an access point from the measured data reception speed, and to determine whether the wireless terminal apparatus establishes connection to the access point. This keeps a user throughput that the wireless terminal apparatus may acquire after having established connection to the access point from decreasing.

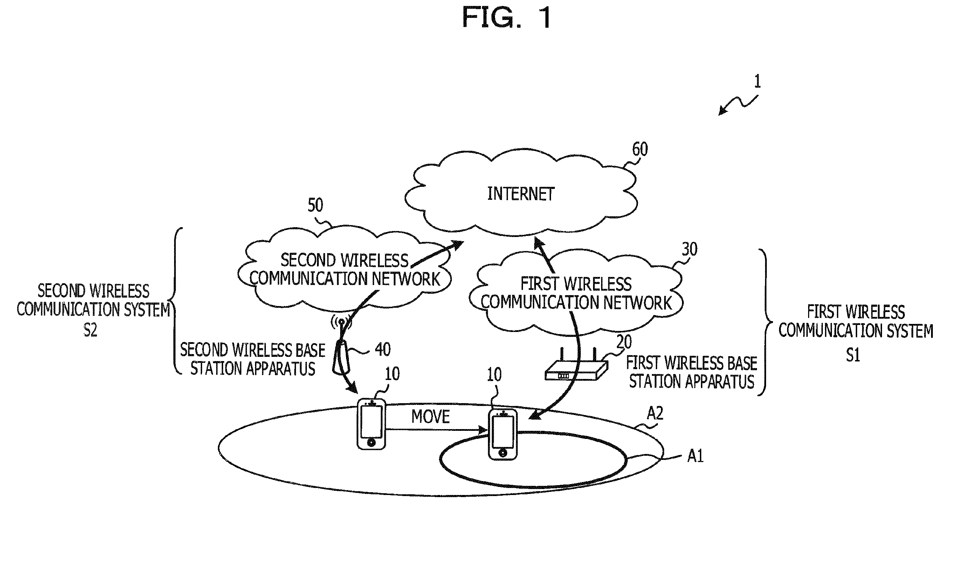

FIG. 1 is an exemplary configuration diagram of a wireless communication system including wireless terminal apparatuses according to the first embodiment. As illustrated in FIG. 1, a wireless communication system 1 includes a wireless terminal apparatus 10, a first wireless base station apparatus 20, a first wireless communication network 30, a second wireless base station apparatus 40, a second wireless communication network 50, and the Internet 60.

The wireless terminal apparatus 10 is a wireless terminal apparatus including a wireless communication module adapted to a first wireless communication system S1, and a wireless communication module adapted to a second wireless communication system S2. The first wireless communication system S1 corresponds to a communication system of a wireless LAN of the wireless standards or the like standardized by the IEEE 802.11 Project. The second wireless communication system S2 corresponds to a wireless communication system of the cellular method such as the CDMA and the LTE. The wireless terminal apparatus 10 includes user equipment (UE) standardized by the specifications of the Third Generation Partnership Project (3GPP). The wireless terminal apparatus 10 is, for example, a multifunctional mobile telephone called a smartphone and a portable computer called a tablet Personal Computer (PC).

The first wireless base station apparatus 20 is a wireless base station apparatus included in the first wireless communication system S1. The first wireless base station apparatus 20 is adapted to an access point of the wireless LAN. The first wireless communication network 30 is a wireless communication network included in the first wireless communication system S1. The first wireless communication network 30 includes a wireless LAN service provider server such as an authentication server.

The second wireless base station apparatus 40 is a wireless base station apparatus included in the second wireless communication system S2. The second wireless base station apparatus 40 is, for example, an evolved NodeB (eNodeB) standardized by the specifications of 3GPP. The second wireless communication network 50 is a wireless communication network included in the second wireless communication system S2. The second wireless communication network 50 includes, for example, an Evolved Packet Core (EPC) standardized by the specifications of 3GPP.

In the wireless communication system 1 illustrated in FIG. 1, a communication area A1 covered by the first wireless base station apparatus 20 is present inside a communication area A2 covered by the second wireless base station apparatus 40. When the wireless terminal apparatus 10 is located inside the communication area A2 but located outside the communication area A1, the wireless terminal apparatus 10 establishes connection to the second wireless base station apparatus 40, and accesses the Internet 60 via the second wireless communication network 50.

In contrast, when the wireless terminal apparatus 10 is located inside the communication area A2 and located inside the communication area A1, the wireless terminal apparatus 10 may establish connection to the second wireless base station apparatus 40, and access the Internet 60 via the second wireless communication network 50. Moreover, the wireless terminal apparatus 10 may establish connection to the first wireless base station apparatus 20, and access the Internet 60 via the first wireless communication network 30, in accordance with the data reception speed when the wireless terminal apparatus 10 receives data transmitted from the first wireless base station apparatus 20. The data reception speed is measured based on a reception result of data that the first wireless base station apparatus 20 has transmitted to another wireless terminal apparatus having already been connected to the first wireless base station apparatus 20 before the wireless terminal apparatus 10 establishes connection to the first wireless base station apparatus 20.

Note that, FIG. 1 is merely an example for explaining the wireless communication system 1 including the wireless terminal apparatus 10 according to the first embodiment. For example, multiple wireless terminal apparatuses 10 may preferably be present inside the communication area A1 covered by the first wireless base station apparatus 20, and multiple wireless terminal apparatuses 10 may preferably be present inside the communication area A2 covered by the second wireless base station apparatus 40. Moreover, multiple first wireless base station apparatuses 20 may preferably be included in the wireless communication system 1, and multiple communication areas corresponding to the multiple first wireless base station apparatuses 20 may preferably be present inside the communication area A2 covered by the second wireless base station apparatus 40.

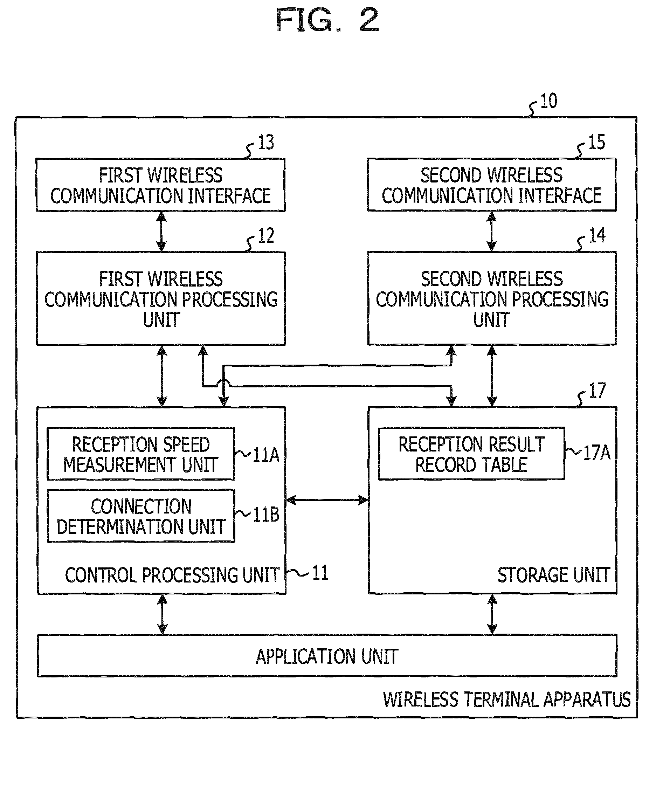

FIG. 2 is an exemplary functional block diagram of the wireless terminal apparatus according to the first embodiment. As illustrated in FIG. 2, the wireless terminal apparatus 10 includes a control processing unit 11, a first wireless communication processing unit 12, and a first wireless communication interface 13. Moreover, the wireless terminal apparatus 10 includes a second wireless communication processing unit 14, a second wireless communication interface 15, an application unit 16, and a storage unit 17.

The first wireless communication interface 13 receives a data signal (wireless waves) that includes a data frame and is transmitted from the first wireless base station apparatus 20. Moreover, the first wireless communication interface 13 transmits a data signal that includes a data frame adapted to a format of the first wireless communication system S1, to the first wireless base station apparatus 20.

The first wireless communication processing unit 12 performs reception processing with respect to a data frame included in a data signal received by the first wireless communication interface 13. The first wireless communication processing unit 12 transfers reception target data in the data frame that is subjected to the reception processing, to the control processing unit 11. Moreover, the first wireless communication processing unit 12 receives transmission target data from the control processing unit 11, and performs transmission processing, such as creating a data frame adapted to a format of the first wireless communication system S1, with respect to the received transmission target data. The first wireless communication processing unit 12 transfers the created data frame to the first wireless communication interface 13.

The second wireless communication interface 15 receives a data signal (wireless waves) that includes a data frame and is transmitted from the second wireless base station apparatus 40. Moreover, the second wireless communication interface 15 transmits a data signal that includes a data frame adapted to a format of the second wireless communication system S2, to the second wireless base station apparatus 40.

The second wireless communication processing unit 14 performs reception processing with respect to the data frame included in the data signal received by the second wireless communication interface 15. The second wireless communication processing unit 14 transfers reception target data in the data frame that is subjected to the reception processing, to the control processing unit 11. Moreover, the second wireless communication processing unit 14 receives transmission target data from the control processing unit 11, and performs transmission processing, such as creating a data frame adapted to the format of the second wireless communication system S2, with respect to the received transmission target data. The second wireless communication processing unit 14 transfers the created data frame to the second wireless communication interface 15.

The application unit 16 receives a command inputted by a user of the wireless terminal apparatus 10. The application unit 16 creates application data for being transmitted to the Internet 60 based on the inputted command, and transmits the created application data to the control processing unit 11. Moreover, the application unit 16 receives the application data transmitted from the Internet 60, from the control processing unit 11. The application unit 16 performs predetermined processing with respect to the received application data, and displays the processed application data to the user of the wireless terminal apparatus 10.

The storage unit 17 stores therein processing programs executed by the control processing unit 11, the first wireless communication processing unit 12, the second wireless communication processing unit 14, and the application unit 16, and data. Moreover, the storage unit 17 stores therein data on processing results by the first wireless communication processing unit 12, the second wireless communication processing unit 14, and the application unit 16. The storage unit 17 includes a reception result record table 17A. The control processing unit 11 creates the reception result record table 17A, and the control processing unit 11 records data included in the reception result record table 17A.

The control processing unit 11 controls operations of the respective units included in the wireless terminal apparatus 10. The control processing unit 11 includes a reception speed measurement unit 11A and a connection determination unit 11B.

The reception speed measurement unit 11A measures the data reception speed (or a reception data rate or some parameter indicating the reception data rate such as MCS) when the wireless terminal apparatus 10 receives data (reception target data) from the first wireless base station apparatus 20. The measurement of the data reception speed by the reception speed measurement unit 11A is performed before the wireless terminal apparatus 10 establishes connection to the first wireless base station apparatus 20. Namely, the measurement of the data reception speed by the reception speed measurement unit 11A is performed on an assumption that the wireless terminal apparatus 10 has established a connection to the first wireless base station apparatus 20. Specifically, the reception speed measurement unit 11A measures such the data reception speed using the reception speed of data that the first wireless base station apparatus 20 has transmitted to another wireless terminal apparatus having already been connected to the first wireless base station apparatus 20.

For example, the reception speed measurement unit 11A instructs the first wireless communication processing unit 12 to perform reception processing on a data frame that is communicated (transmitted and received) between the first wireless base station apparatus 20 and another wireless terminal apparatus having already been connected to the first wireless base station apparatus 20. When the reception speed measurement unit 11A instructs the first wireless communication processing unit 12 to perform the reception processing on the data frame, the wireless terminal apparatus 10 is in a state of not being connected to the first wireless base station apparatus 20. The first wireless communication processing unit 12 receives a data frame communicated between the first wireless base station apparatus 20 and another wireless terminal apparatus having already been connected to the first wireless base station apparatus 20. With respect to data in the received data frame, a specific wireless scheme is applied that is adaptively determined in accordance with the wireless quality between the first wireless base station apparatus 20 and another wireless terminal apparatus having already been connected to the first wireless base station apparatus 20. The wireless scheme adaptively applied to data is, for example, the MCS. The first wireless communication processing unit 12 performs reception processing on the data in the data frame using the applied specific wireless scheme. The first wireless communication processing unit 12 notifies the reception speed measurement unit 11A of a reception result of the data that is subjected to the reception processing.

The reception speed measurement unit 11A uses the reception result of the data notified from the first wireless communication processing unit 12 to obtain a data reception speed when the wireless terminal apparatus 10 receives data from the first wireless base station apparatus 20. In the first embodiment, the data reception speed to be obtained is the wireless scheme (or the wireless communication scheme) that is applied to data transmitted from the first wireless base station apparatus 20 to the wireless terminal apparatus 10. The wireless scheme applied to the data is, for example, the MCS. As described in the foregoing, the wireless scheme that is applied to data communicated between the first wireless base station apparatus 20 and an wireless terminal apparatus is adaptively determined so as to indicate the data rate suitable for the wireless quality of the data signal to be communicated, after the wireless terminal apparatus establishes connection to the first wireless base station apparatus 20. Therefore, in the first embodiment, the wireless scheme in association with a specific data rate, in other words, the wireless scheme indicating the specific data rate is the data reception speed measured by the wireless terminal apparatus 10.

The connection determination unit 11B determines whether the wireless terminal apparatus 10 establishes connection to the first wireless base station apparatus 20 in accordance with the data reception speed measured by the reception speed measurement unit 11A.

For example, if the connection determination unit 11B determines that the wireless terminal apparatus 10 establishes connection to the first wireless base station apparatus 20, the connection determination unit 11B instructs the first wireless communication processing unit 12 to connect the wireless terminal apparatus 10 to the first wireless base station apparatus 20. When the wireless terminal apparatus 10 establishes connection to the first wireless base station apparatus 20, the control processing unit 11 receives application data from the application unit 16, and transfers transmission target data including the received application data, to the first wireless communication processing unit 12. Moreover, the control processing unit 11 receives reception target data from the irst wireless communication processing unit 12, and transfers application data included in the received reception target data to the application unit 16. When the wireless terminal apparatus 10 already has established connection to the second wireless base station apparatus 40, the connection determination unit 11B may instruct the second wireless communication processing unit 14 to cut off the connection to the second wireless base station apparatus 40.

If the connection determination unit 11B determines that the wireless terminal apparatus 10 does not establish connection to the first wireless base station apparatus 20, the connection to the second wireless base station apparatus 40 is maintained. Alternatively, the connection determination unit 11B instructs the second wireless communication processing unit 14 to connect the wireless terminal apparatus 10 to the second wireless base station apparatus 40. When the wireless terminal apparatus 10 establishes connection to the second wireless base station apparatus 40, the control processing unit 11 receives application data from the application unit 16, and transfers transmission target data including the received application data, to the second wireless communication processing unit 14. Moreover, the control processing unit 11 receives reception target data from the second wireless communication processing unit 14, and transfers application data included in the received reception target data to the application unit 16.

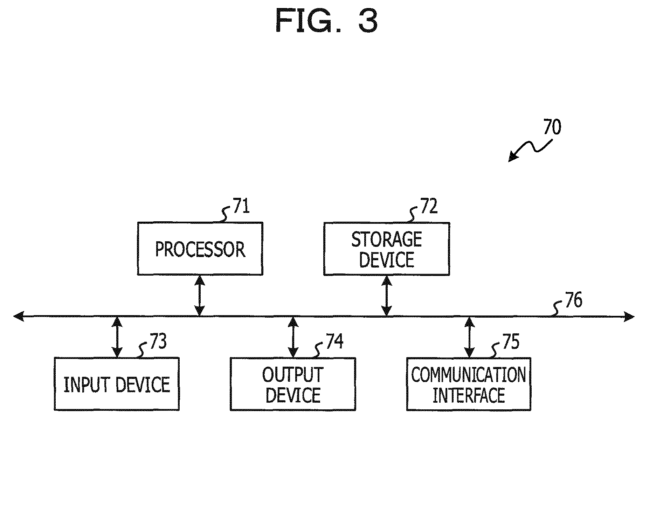

FIG. 3 is an exemplary hardware block diagram of a wireless terminal apparatus according to the first embodiment. As illustrated in FIG. 3, a wireless terminal apparatus 70 includes a processor 71, a storage device 72, an input device 73, an output device 74, a communication interface 75, and a bus 76. The processor 71, the storage device 72, the input device 73, the output device 74, and the communication interface 75 are mutually connected to via the bus 76.

The processor 71 is a logic circuit, such as a central processing unit (CPU), that performs calculation processing. The processor 71 corresponds to the control processing unit 11, the first wireless communication processing unit 12, the second wireless communication processing unit 14, and the application unit 16.

The storage device 72 is a device that stores therein a processing program executed by the processor 71, data used for the processing by the processor 71, and data on a result of the processing by the processor 71. The storage device 72 corresponds to the storage unit 17.

The input device 73 is a device with which a user of the wireless terminal apparatus 70 inputs a command to the wireless terminal apparatus 70, and is, for example, a touch panel, a key board, a mouse, and the like. The output device 74 is a device on which a result of the processing by the processor 71 is displayed, and is, for example, a liquid crystal display. The input device 73 and the output device 74 correspond to the application unit 16.

The communication interface 75 is a modulator and demodulator, an amplifier, an antenna, and the like. The communication interface 75 corresponds to the first wireless communication interface 13 and the second wireless communication interface 15.

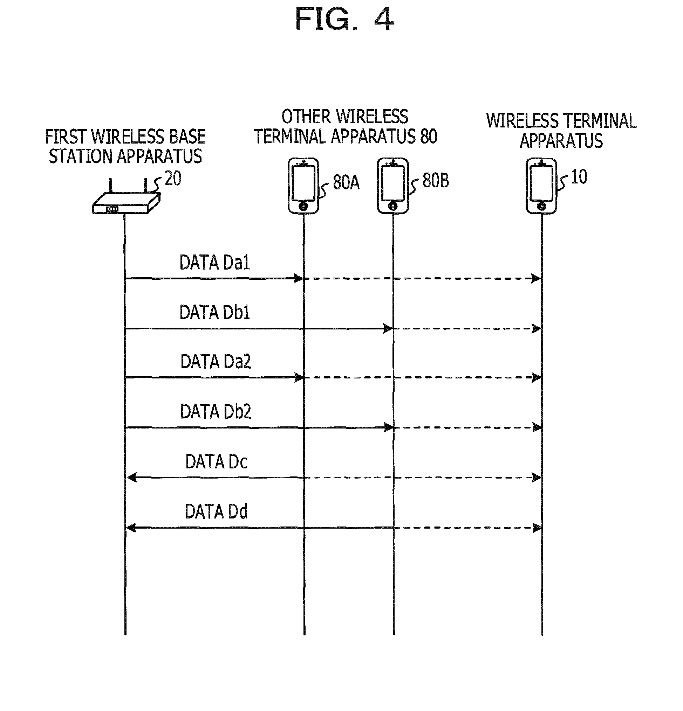

FIG. 4 is an explanation diagram of data reception by the wireless terminal apparatus according to the first embodiment. In FIG. 4, a wireless terminal apparatus 80A and a wireless terminal apparatus 80B are another wireless terminal apparatuses other than the wireless terminal apparatus 10. The wireless terminal apparatus 80A and the wireless terminal apparatus 80B are wireless terminal apparatuses including wireless communication modules at least adapted to the first wireless communication system S1, and establish connection to and perform communication with the first wireless base station apparatus 20. The wireless terminal apparatus 80A and the wireless terminal apparatus 80B may preferably be wireless terminal apparatuses that are configured so as to have a function similar to that of the wireless terminal apparatus 10. Hereinafter, an wireless terminal apparatus having already been connected to the first wireless base station apparatus 20 and other than the wireless terminal apparatus 10, such as the wireless terminal apparatus 80A and the wireless terminal apparatus 80B, is called "another wireless terminal apparatus 80" in some cases.

As illustrated in FIG. 4, the wireless terminal apparatus 80A is already connected to the first wireless base station apparatus 20, and data is transmitted and received between the first wireless base station apparatus 20 and the wireless terminal apparatus 80A. Moreover, the wireless terminal apparatus 80B is already connected to the first wireless base station apparatus 20, and data is transmitted and received between the first wireless base station apparatus 20 and the wireless terminal apparatus 80B. Data transmitted and received between the first wireless base station apparatus 20 and another wireless terminal apparatus 80 is transmitted and received in a data frame adapted to a format of the first wireless communication system S1 and by a data signal (wireless waves) of a predetermined channel (frequency).

Meanwhile, the wireless terminal apparatus 10 receives the data transmitted and received between the first wireless base station apparatus 20 and another wireless terminal apparatus 80, in a state of not being connected to the first wireless base station apparatus 20. In other words, the wireless terminal apparatus 10 receives data that is transmitted and received between the first wireless base station apparatus 20 and the wireless terminal apparatus 80A and data that is transmitted and received between the first wireless base station apparatus 20 and the wireless terminal apparatus 80B, in a state of not being connected to the first wireless base station apparatus 20.

Specifically, in an example illustrated in FIG. 4, the wireless terminal apparatus 80A receives data Da1 transmitted from the first wireless base station apparatus 20 toward the wireless terminal apparatus 80A as a destination. Moreover, the wireless terminal apparatus 10 receives the data Da1 transmitted from the first wireless base station apparatus 20 toward the wireless terminal apparatus 80A as a destination. The wireless terminal apparatus 80B receives data Db1 subsequently transmitted from the first wireless base station apparatus 20 toward the wireless terminal apparatus 80B as a destination. Moreover, the wireless terminal apparatus 10 receives the data Db1 subsequently transmitted from the first wireless base station apparatus 20 toward the wireless terminal apparatus 80B as a destination. Hereinafter, similarly, data Da2 subsequently transmitted from the first wireless base station apparatus 20 toward the wireless terminal apparatus 80A as a destination is received by the wireless terminal apparatus 80A and by the wireless terminal apparatus 10. Data Db2 subsequently transmitted from the first wireless base station apparatus 20 toward the wireless terminal apparatus 80B as a destination is received by the wireless terminal apparatus 80B and by the wireless terminal apparatus 10. Data Dc subsequently transmitted from the wireless terminal apparatus 80A toward the first wireless base station apparatus 20 as a destination is received by the first wireless base station apparatus 20 and by the wireless terminal apparatus 10. Data Dd subsequently transmitted from the wireless terminal apparatus 80B toward the first wireless base station apparatus 20 as a destination is received by the first wireless base station apparatus 20 and by the wireless terminal apparatus 10.

As described in the foregoing, the reception speed measurement unit 11A measures the data reception speed when the wireless terminal apparatus 10 receives data from the first wireless base station apparatus 20, using the reception speed of data (first data) that the first wireless base station apparatus 20 has transmitted toward another wireless terminal apparatus 80. Therefore, data frame to be processed by the reception speed measurement unit 11A and the first wireless communication processing unit 12 may preferably be a data frame including the data that the first wireless base station apparatus 20 has transmitted to another wireless terminal apparatus 80.

However, a transmission source and a destination of the data included in the data frame are not distinguished as long as information in the data frame is referred after the data frame is subjected to the reception processing. Therefore, as described in the foregoing, the reception speed measurement unit 11A instructs the first wireless communication processing unit 12 to perform reception processing on a data frame (data frame including second data) that is communicated between the first wireless base station apparatus 20 and another wireless terminal apparatus 80. Moreover, as is understood from FIG. 4, the first wireless communication processing unit 12 performs reception processing on the data frame communicated between the first wireless base station apparatus 20 and another wireless terminal apparatus 80. The reception speed measurement unit 11A refers to information in the data frame that is subjected to the reception processing by the first wireless communication processing unit 12, and performs measurement processing of the reception speed relative to data in the data frame in accordance with the content of the referred information.

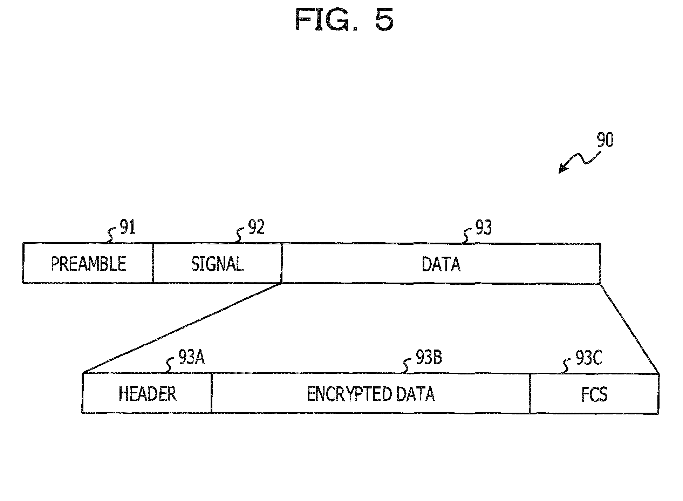

FIG. 5 is an example diagram of a format of a data frame that is transmitted and received between a first wireless base station apparatus and a wireless terminal apparatus having already been connected to the first wireless base station apparatus. As illustrated in FIG. 5, a data frame 90 that is transmitted and received between the first wireless base station apparatus 20 and a wireless terminal apparatus having already been connected to the first wireless base station apparatus 20 includes a Preamble 91, a SIGNAL 92, and a DATA 93. The data frame 90 is, for example, a physical layer convergence protocol (PLCP) data unit (PPDU).

The Preamble 91 at the beginning of the data frame 90 is a synchronization signal. When the Preamble 91 is checked, the first wireless communication processing unit 12 performs reception processing with respect to the DATA 93.

The SIGNAL 92 subsequent to the Preamble 91 is a control signal related to the DATA 93 subsequent to the SIGNAL 92. The SIGNAL 92 further indicates an MCS applied to the DATA 93. The MCS is an example of a wireless scheme that is adaptively applied to the data in the data frame 90 in accordance with the wireless environment.

The DATA 93 is transmission and reception target data by the data frame 90 between the first wireless base station apparatus 20 and the wireless terminal apparatus having already been connected to the first wireless base station apparatus 20. The DATA 93 is, for example, a PLCP service data unit (PSDU). Hereinafter, "transmission and reception target data by the data frame 90 between the first wireless base station apparatus 20 and the wireless terminal apparatus having already been connected to the first wireless base station apparatus 20" is called transmission and reception target data for convenience. The transmission and reception target data corresponds to transmission target data for an apparatus that transmits the data frame 90 including the transmission and reception target data, in other words, for the first wireless base station apparatus 20 or the wireless terminal apparatus having already been connected to the first wireless base station apparatus 20. Moreover, the transmission and reception target data corresponds to reception target data for an apparatus that receives the data frame 90 including the transmission and reception target data. The MCS indicated in the SIGNAL 92 is applied to the DATA 93, and the DATA 93 is transmitted and received in accordance with the applied MCS.

The DATA 93 includes a Header 93A, an Encrypted Data 93B, and a Frame Check Sequence (FCS) 93C.

The Header 93A includes identification information on a transmission source and a destination such as an MAC address, and identification information on the first wireless base station apparatus 20. For example, when a transmission source of the data frame 90 is the first wireless base station apparatus 20, identification information on the first wireless base station apparatus 20 is designated for the transmission source. Moreover, the Header 93A further includes information on encryption that is used in the Encrypted Data 93B subsequent to the Header 93A.

The Encrypted Data 93B is encrypted data. The FCS 93C is transmission and reception target data, specifically, redundancy data for checking whether an error occurs in the Header 93A or the Encrypted Data 93B. The FCS 93C is added after the Encrypted Data 93B is encrypted. This allows the first wireless communication processing unit 12 to determine whether an error occurs in the Header 93A or the Encrypted Data 93B using the FCS 93C without the Encrypted Data 93B being decoded.

The first wireless communication processing unit 12 performs synchronization processing of the data frame 90 using the Preamble 91. After executing the synchronization processing, the first wireless communication processing unit 12 performs reception processing with respect to the DATA 93 using an MCS indicated in the SIGNAL 92. The first wireless communication processing unit 12 then uses the FCS 93C to check the presence or absence of an error with respect to transmission and reception target data.

Here, the low wireless quality in reception of transmission and reception target data relative to the applied MCS mainly causes an error in the transmission and reception target data. Accordingly, as a result of the error check using the FCS 93C, if no error occurs in the transmission and reception target data, it can be said that the wireless quality of signals between the apparatus having transmitted the transmission and reception target data and the wireless terminal apparatus 10 having received the transmission and reception target data is high relative to the MCS applied to the transmission and reception target data. In contrast, if an error occurs in the transmission and reception target data, it can be said that the wireless quality of signals between the apparatus having transmitted the transmission and reception target data and the wireless terminal apparatus 10 having received the transmission and reception target data is low relative to the MCS applied to the transmission and reception target data. As is described later, there is a possibility that the apparatus having transmitted the transmission and reception target data is the first wireless base station apparatus 20.

As a result of the error check using the FCS 93C, if it is determined that no error occurs in the transmission and reception target data, the information in the Header 93A is available. The first wireless communication processing unit 12 then refers to the Header 93A, and acquires information, such as a transmission source or a destination of the transmission and reception target data. The first wireless communication processing unit 12 then notifies the reception speed measurement unit 11A of the acquired information. If the transmission source notified from the first wireless communication processing unit 12 is the first wireless base station apparatus 20, it can be said that the wireless terminal apparatus 10 may receive, with the MCS applied to transmission and reception target data, the transmission and reception target data from the first wireless base station apparatus 20 without any error. The reception speed measurement unit 11A then records the MCS applied to the transmission and reception target data that has been received without any error in the reception result record table 17A, as an MCS having a possibility to be applied to transmission target data transmitted from the first wireless base station apparatus 20 to the wireless terminal apparatus 10.

In contrast, as a result of the error check using the FCS 93C, if it is determined that an error occurs in the transmission and reception target data, the information in the Header 93A is unavailable. Accordingly, if it is determined that an error occurs in transmission and reception target data, the first wireless communication processing unit 12 does not acquire information, such as a transmission source or a destination of the transmission and reception target data. The reception speed measurement unit 11A then uses a value of RSSI that is measured when the Preamble 91 is received to determine whether the transmission source of the transmission and reception target data is the first wireless base station apparatus 20. If it is determined that the transmission source of the transmission and reception target data is the first wireless base station apparatus 20, the reception speed measurement unit 11A records a fact that the MCS applied to the transmission and reception target data causes an error in the transmission and reception target data, in the reception result record table 17A.

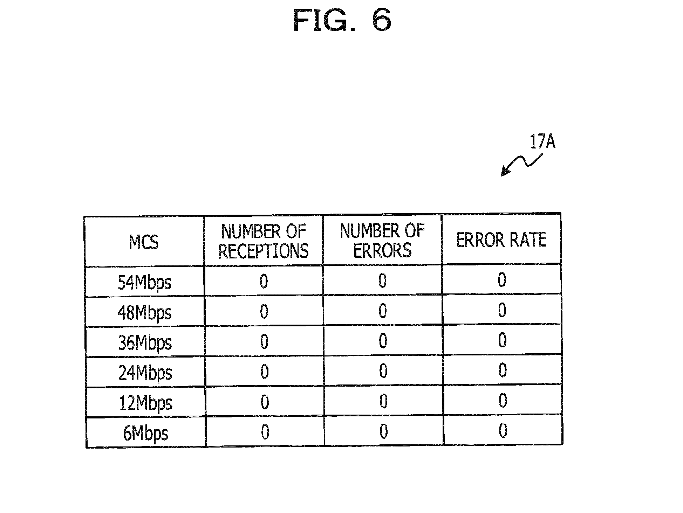

FIG. 6 is an example view of a reception result record table. As illustrated in FIG. 6, fields of the number of receptions, the number of errors, and the error rate are prepared for every MCS in the reception result record table 17A. The number of receptions is the number of transmission and reception target data that is subjected to the reception processing by the first wireless communication processing unit 12. The number of errors is the number of transmission and reception target data that is determined that an error occurs as a result of the error check using the FCS 93C. The error rate is a value in which the number of errors is divided by the number of receptions (the number of errors/the number of receptions). FIG. 6 illustrates a state when the reception result record table 17A is created. As illustrated in FIG. 6, when the reception result record table 17A is created, information on all the MCSs, in other words, the number of receptions, the number of errors, and the error rate are recorded as "0" as an initial value. Note that, in an example illustrated in FIG. 6, as information on an MCS, the data rate when the MCS is applied, in other words, a value of the data rate adapted to the MCS is recorded.

The reception result record table 17A is created in scanning processing that detects the first wireless base station apparatus 20 to which the wireless terminal apparatus 10 may be connected. The scanning processing may preferably be passive scanning processing or active scanning processing. In the passive scanning processing, the first wireless communication processing unit 12 receives beacon signals transmitted from at least one first wireless base station apparatus 20 via the first wireless communication interface 13 during a certain period of time. In the active scanning processing, the first wireless communication processing unit 12 broadcasts probe request signals across channels available for the wireless terminal apparatus 10. The first wireless communication processing unit 12 then receives a corresponding probe response signal transmitted from at least one first wireless base station apparatus 20 via the first wireless communication interface 13. The scanning processing may preferably be executed when a switch in the wireless terminal apparatus 10 for using the first wireless communication system S1 is made to be an ON state. Moreover, the scanning processing may preferably be executed at a predetermined time interval. Note that, as described in the foregoing, unless a particular statement of distinguishing a beacon signal from a probe response signal is made, the beacon signal and the probe response signal are collectively called a "beacon signal".

When a beacon signal is received by the scanning processing, the first wireless communication processing unit 12 measures the RSSI of the received beacon signal. If a value of RSSI measured by the first wireless communication processing unit 12 is not less than a predetermined threshold, the reception speed measurement unit 11A creates the reception result record table 17A corresponding to the first wireless base station apparatus 20 having transmitted the beacon signal, in the storage unit 17. Information in the created reception result record table 17A is updated every time when the first wireless communication processing unit 12 performs reception processing with respect to transmission and reception target data that is transmitted and received between the first wireless base station apparatus 20 and another wireless terminal apparatus 80. The reception speed measurement unit 11A refers to the updated information in the reception result record table 17A, and specifies an MCS to be applied to transmission and reception target data transmitted from the first wireless base station apparatus 20 to the wireless terminal apparatus 10 when wireless terminal apparatus 10 establishes connection to the first wireless base station apparatus 20.

An example of data frame reception processing executed by the reception speed measurement unit 11A and the first wireless communication processing unit 12 will be explained. Further, the data frame reception processing may preferably be started after the scanning processing has completed. Moreover, the data frame reception processing may preferably be started when at least one reception result record table 17A is created during the scanning processing.

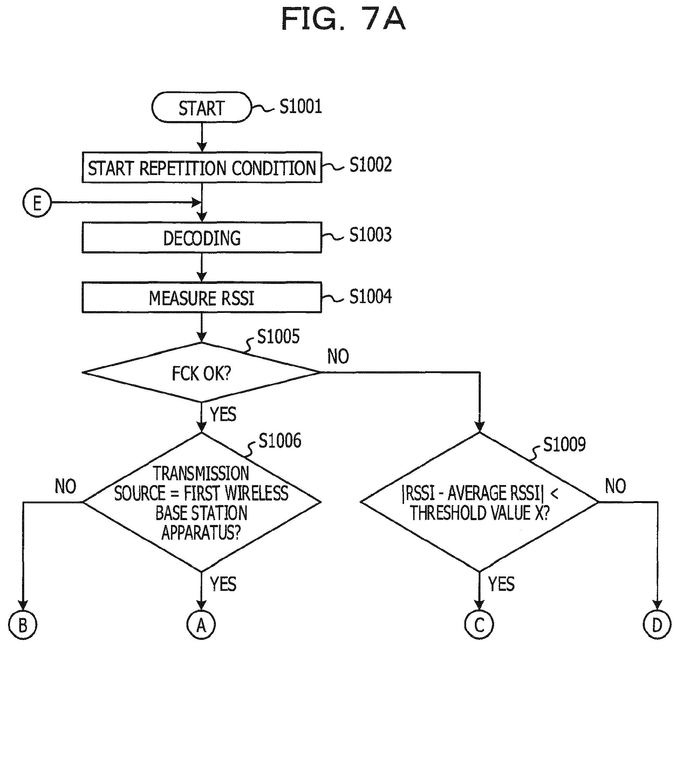

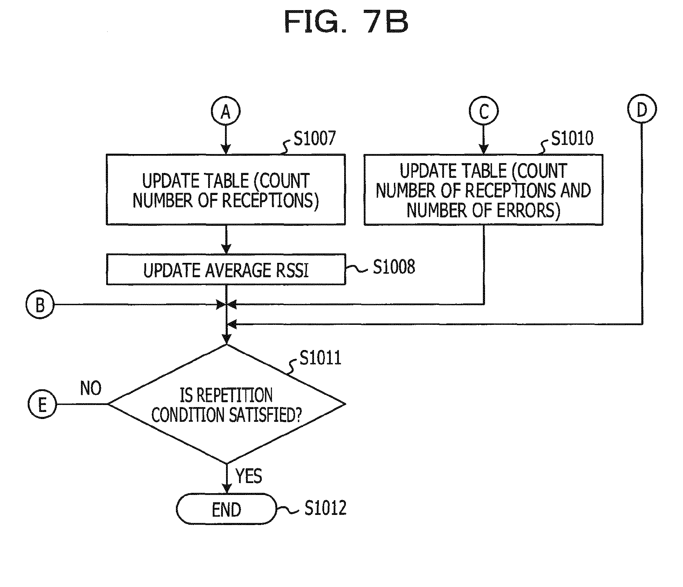

FIG. 7A and FIG. 7B are exemplary flowcharts of data frame reception processing performed by the wireless terminal apparatus according to the first embodiment. Note that, processes included in the processing flows illustrated in FIG. 7A and FIG. 7B do not have to be separated temporally, but multiple processes may preferably be performed in parallel temporally.

When the reception speed measurement unit 11A instructs the first wireless communication processing unit 12 to perform reception processing on the data frame 90, a series of data frame reception processing is started (Step S1001). The reception speed measurement unit 11A starts a repetition condition of the series of data frame reception processing. The repetition condition indicates a condition with which the series of data frame reception processing is repeated between at Step S1002 and Step S1011. The repetition condition may preferably be a predetermined reception processing time, or may preferably be the number of reception processing times relative to the predetermined number of the data frames 90. If the repetition condition is the predetermined reception processing time, the reception speed measurement unit 11A starts measurement of the reception processing time at Step S1002. If the repetition condition is the number of reception processing times relative to the predetermined number of the data frames 90, the reception speed measurement unit 11A starts measurement of the number of reception processing times at Step S1002.

The first wireless communication processing unit 12 checks the Preamble 91 in the data frame 90 that is received via the first wireless communication interface 13, and performs synchronization processing on the data frame 90. The first wireless communication processing unit 12 then performs demodulation and decoding with respect to the DATA 93 that is transmission and reception target data, in accordance with the MCS indicated by the SIGNAL 92 in the data frame 90 (Step S1003). Note that, the decoding performed at Step S1003 indicates not decoding with respect to the encryption but decoding with respect to an error-correcting code indicated by the MCS. The first wireless communication processing unit 12 measures an RSSI when receiving the Preamble 91 in addition to the reception processing with respect to the DATA 93 at Step S1003 (Step S1004).

The first wireless communication processing unit 12 utilizes the FCS 93C in the DATA 93 to check whether an error occurs in transmission and reception target data, specifically, in the Header 93A and the Encrypted Data 93B (Step S1005). As a result of the error check, if it is checked that no error occurs in the transmission and reception target data ("YES" at Step S1005), information in the Header 93A is available. The first wireless communication processing unit 12 then checks a transmission source of the transmission and reception target data from information in the Header 93A (Step S1006).

As a result of the check of the transmission source, if it is checked that the transmission source of the transmission and reception target data is the first wireless base station apparatus 20 ("YES" at Step S1006), the first wireless communication processing unit 12 notifies the reception speed measurement unit 11A of the information acquired by the reception processing on the data frame 90. Specifically, the information notified to the reception speed measurement unit 11A is the value of RSSI measured at Step S1004. Moreover, the information notified to the reception speed measurement unit 11A is information indicating a specific MCS that is applied to the transmission and reception target data, and information indicating that the transmission and reception target data is received without any error, and the transmission source of the transmission and reception target data, in other words, a specific first wireless base station apparatus 20. The reception speed measurement unit 11A receives information notified from the first wireless communication processing unit 12.

The reception speed measurement unit 11A reflects the received information to the reception result record table 17A, and updates information to be recorded in the reception result record table 17A (Step S1007). Specifically, the reception speed measurement unit 11A increments the number of receptions of the MCS applied to the transmission and reception target data in the reception result record table 17A corresponding to the first wireless base station apparatus 20 that is the transmission source of the transmission and reception target data. Moreover, the reception speed measurement unit 11A recalculates the error rate with respect to the MCS applied to the transmission and reception target data in the reception result record table 17A corresponding to the first wireless base station apparatus 20 that is the transmission source of the transmission and reception target data. The reception speed measurement unit 11A records the recalculated error rate in association with the corresponding MCS in the reception result record table 17A.

The reception speed measurement unit 11A uses the value of RSSI notified from the first wireless communication processing unit 12 to update a value of average RSSI with respect to the data frame 90 transmitted from the first wireless base station apparatus 20 (Step S1008). Specifically, the reception speed measurement unit 11A calculates a value of average RSSI (n) by an expression (1) below.

$$\text{average RSSI } (n) = \alpha \cdot \text{average RSSI } (n-1) + (1-\alpha) \cdot \text{measurement RSSI} \dots (1)$$

Here, n in the expression (1) indicates the number of the data frames 90 that are subjected to the reception processing by the first wireless communication processing unit 12, and the transmission source of which is the first wireless base station apparatus 20. Moreover, $\alpha$ is a predetermined constant that is set from 0 to 1. The measurement RSSI indicates an RSSI that is measured from the Preamble 91 in the reception data frame 90 at this time, in other words, at n-th time, and as described in the foregoing, is notified from the first wireless communication processing unit 12. The average RSSI (n-1) is a value of average RSSI calculated with respect to (n-1) pieces of data frames 90, and is calculated when the process at Step S1008 is performed with respect to the reception data frame 90 at (n-1)th time.

The reception speed measurement unit 11A holds the updated value of average RSSI in association with the first wireless base station apparatus 20. As is described later related to the process at Step S1009, the average RSSI held by the reception speed measurement unit 11A is used when an error occurs in transmission and reception target data that is subjected to the reception (decoding) processing by the first wireless communication processing unit 12.

When the process at Step S1008 is performed, the reception speed measurement unit 11A proceeds the processing to Step S1011.

In contrast, if it is checked that the transmission source is not the first wireless base station apparatus 20 ("NO" at Step S1006), the first wireless communication processing unit 12 notifies the reception speed measurement unit 11A of the information acquired by the reception processing on the data frame 90. Specifically, the first wireless communication processing unit 12 notifies the reception speed measurement unit 11A that the transmission source of the transmission and reception target data in the data frame 90 that is subjected to the reception processing is not the first wireless base station apparatus 20. When receiving the information notified from the first wireless communication processing unit 12, the reception speed measurement unit 11A proceeds the processing to Step S1011.

Moreover, as a result of the error check, if it is checked that an error occurs in the transmission and reception target data ("NO" at Step S1005), information in the Header 93A is unavailable, and the transmission source of the transmission and reception target data may not be specified from the information in the Header 93A. The first wireless communication processing unit 12 then notifies the reception speed measurement unit 11A of information acquired by the reception processing on the data frame 90. Specifically, the information notified to the reception speed measurement unit 11A is the value of RSSI measured at Step S1004. Moreover, the information notified to the reception speed measurement unit 11A is information indicating a specific MCS that is applied to the transmission and reception target data, and information indicating that the transmission and reception target data is received with an error. The reception speed measurement unit 11A receives the information notified from the first wireless communication processing unit 12.

The reception speed measurement unit 11A compares the received value of RSSI with the value of average RSSI that is held by the reception speed measurement unit 11A, and determines whether the transmission source is the first wireless base station apparatus 20 (Step S1009). As described in the foregoing, the value of average RSSI in association with the first wireless base station apparatus 20 is held by the reception speed measurement unit 11A. The reception speed measurement unit 11A calculates a difference between the measured RSSI and the value of average RSSI that is held by the reception speed measurement unit 11A. The reception speed measurement unit 11A then determines whether the calculated difference is less than a predetermined threshold (Step S1009).

If it is determined that the calculated difference is less than the predetermined threshold ("YES" at Step S1009), the reception speed measurement unit 11A specifies that the transmission source of the transmission and reception target data received with an error is the first wireless base station apparatus 20 that is adapted to the average RSSI used for the calculation of the difference. The reception speed measurement unit 11A then reflects the information notified from the first wireless communication processing unit 12 to the reception result record table 17A corresponding to the specified first wireless base station apparatus 20, and updates information to be recorded in the reception result record table 17A (Step S1010).

Specifically, the reception speed measurement unit 11A increments the number of receptions of the MCS applied to the transmission and reception target data in the reception result record table 17A corresponding to the first wireless base station apparatus 20 that is the transmission source of the transmission and reception target data. Moreover, the reception speed measurement unit 11A increments the number of errors with respect to the MCS applied to the transmission and reception target data in the reception result record table 17A corresponding to the first wireless base station apparatus 20 that is the transmission source of the transmission and reception target data. The reception speed measurement unit 11A uses the number of receptions and the number of errors that are updated to recalculate the error rate, and records the recalculated error rate in association with the corresponding MCS in the reception result record table 17A. When the process at Step S1010 is performed, the reception speed measurement unit 11A proceeds the processing to Step S1011.

In contrast, if it is determined that the calculated difference is not less than a predetermined threshold ("NO" at Step S1009), the reception speed measurement unit 11A proceeds to Step S1011 without updating the reception result record table 17A.

At Step S1011, the reception speed measurement unit 11A determines whether a repetition condition is satisfied. For example, if the repetition condition is the predetermined reception processing time, the reception speed measurement unit 11A determines whether the reception processing time the measurement of which is started at Step S1002 is not less than a predetermined time threshold. Moreover, for example, if the repetition condition is the number of reception processing times relative to the predetermined number of the data frames 90, the reception speed measurement unit 11A determines whether the number of reception processing times the measurement of which is started at Step S1002 is not less than a threshold of the predetermined number of times.

If it is determined that the repetition condition is not satisfied ("NO" at Step S1011), the series of data frame reception processing is returned to Step S1003 and continued. The first wireless communication processing unit 12 performs reception processing at Step S1003 with respect to a newly received data frame 90.

In contrast, if it is determined that the repetition condition is satisfied ("YES" at Step S1011), the series of data frame reception processing is ended (Step S1012).

The reception speed measurement unit 11A uses the information in the reception result record table 17A that is recorded through the series of data frame reception processing as described above to specify the data reception speed acquired when the wireless terminal apparatus 10 receives data from the first wireless base station apparatus 20. Specifically, the wireless terminal apparatus 10 according to the first embodiment specifies the wireless scheme that is applied when the wireless terminal apparatus 10 receives data from the first wireless base station apparatus 20. The specified wireless scheme may preferably be an MCS in association with a specific data rate.

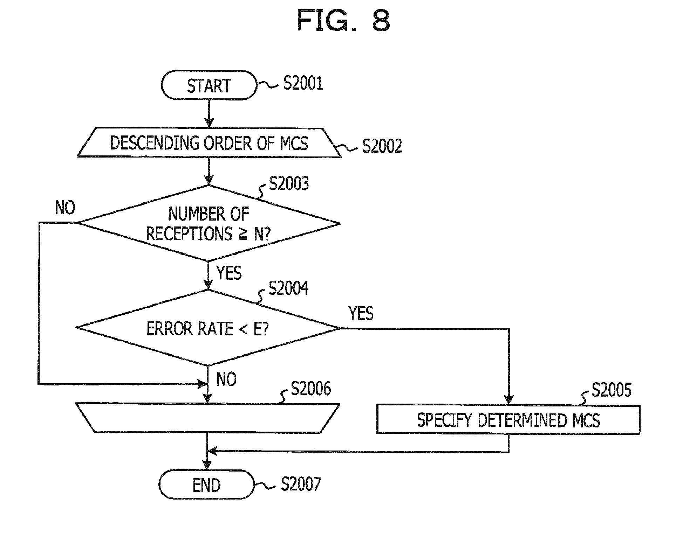

FIG. 8 is an exemplary flowchart of wireless scheme specifying processing performed by the wireless terminal apparatus according to the first embodiment. When a series of wireless scheme specifying processing is started (Step S2001), the reception speed measurement unit 11A performs processes from at Step S2002 to at Step S2006 to the MCSs in the reception result record table 17A in descending order, in other words, in the descending order of MCS with the highest corresponding data rate. Specifically, the reception speed measurement unit 11A determines whether the number of receptions of transmission and reception target data with respect to the MCS is not less than a predetermined threshold N (Step S2003). The reception speed measurement unit 11A then determines whether the error rate of the transmission and reception target data with respect to the MCS is less than a predetermined threshold E (Step S2004).

If it is determined that the number of receptions is not less than the predetermined threshold N ("YES" at Step S2003) and determined that the error rate is less than the predetermined threshold E ("YES" at Step S2004), the series of wireless scheme specifying processing is proceeded to Step S2005. In other words, the reception speed measurement unit 11A specifies the MCS that is applied when the wireless terminal apparatus 10 receives data from the first wireless base station apparatus 20 as the determined MCS (Step S2005). When the MCS that is applied when the wireless terminal apparatus 10 receives data from the first wireless base station apparatus 20 is specified, the series of wireless scheme specifying processing is ended (Step S2007).

In contrast, if it is determined that the number of receptions is less than the predetermined threshold N ("NO" at Step S2003) and determined that the error rate is not less than the predetermined threshold E ("NO" at Step S2004), the series of wireless scheme specifying processing is performed with respect to a next MCS in descending order. When the processes from at Step S2002 to at Step S2006 are performed with respect to all the MCSs in the reception result record table 17A, the series of wireless scheme specifying processing is ended (Step S2007).

In this manner, the wireless terminal apparatus according to the first embodiment measures the data reception speed that is applied when the wireless terminal apparatus receives data from the first wireless base station apparatus before the wireless terminal apparatus establishes connection to the first wireless base station apparatus. Specifically, the wireless terminal apparatus according to the first embodiment obtains the data reception speed by performing reception processing on data transmitted from the first wireless base station apparatus to another wireless terminal apparatus having already been connected to the first wireless base station apparatus. As described in the foregoing, a value of RSSI of the received beacon signal from the first wireless base station apparatus does not naturally reflect the wireless quality of a signal communicated between the first wireless base station apparatus and a wireless terminal apparatus. Therefore, the data reception speed that is applied when the wireless terminal apparatus receives data from the first wireless base station apparatus may not be naturally acquired from the value of RSSI of the received beacon signal from the first wireless base station apparatus. However, the wireless terminal apparatus according to the first embodiment may acquire the data reception speed that is applied when the wireless terminal apparatus receives data from the first wireless base station apparatus before the wireless terminal apparatus establishes connection to the first wireiess base station apparatus.

Moreover, the wireless terminal apparatus according to the first embodiment specifies the wireless scheme that is applied when the wireless terminal apparatus receives data from the first wireless base station apparatus before the wireless terminal apparatus establishes connection to the first wireless base station apparatus. As described in the foregoing, the wireless scheme that is applied to data communicated between the wireless terminal apparatus and the first wireless base station apparatus may be adaptively and stepwisely changed in accordance with the wireless quality of a signal that is communicated between the first wireless base station apparatus and the wireless terminal apparatus. Meanwhile, the wireless terminal apparatus according to the first embodiment may specify the wireless scheme that may be adaptively and stepwisely changed in accordance with the wireless quality of a signal that is communicated between the first wireless base station apparatus and the wireless terminal apparatus before the wireless terminal apparatus establishes connection to the first wireless base station apparatus.

The data reception speed that is measured by the wireless terminal apparatus 10 according to the first embodiment, in other words, information on the wireless scheme that is applied when the wireless terminal apparatus 10 receives data from the first wireless base station apparatus 20 may preferably be utilized in one or more processes described in items (i) to (iii) below.

(i) The reception speed measurement unit 11A notifies the application unit 16 of information on the wireless scheme that is specified by the series of wireless scheme specifying processing, together with information on the corresponding first wireless base station apparatus 20. For example, when multiple wireless schemes corresponding to the multiple first wireless base station apparatuses 20 are specified, the reception speed measurement unit 11A notifies the application unit 16 of information on each of the first wireless base station apparatuses 20 in association with information on each of the wireless schemes. The application unit 16 displays the data rate adapted to the wireless scheme notified from the reception speed measurement unit 11A together with information on the corresponding first wireless base station apparatus 20, for the user of the wireless terminal apparatus 10.

The display of the information as in the foregoing allows the user of the wireless terminal apparatus 10 to know the data rate that is acquired after the wireless terminal apparatus 10 has established connection to the first wireless base station apparatus 20, and to determine whether the wireless terminal apparatus 10 establishes connection to the first wireless base station apparatus 20. Moreover, the user of the wireless terminal apparatus 10 may determine to which first wireless base station apparatus 20 the wireless terminal apparatus 10 establishes connection based on the displayed data rate. Alternatively, the user of the wireless terminal apparatus 10 may determine that wireless terminal apparatus 10 does not establish connection to the first wireless base station apparatus 20, but performs communication via connection to the second wireless base station apparatus 40, based on the displayed data rate.

(ii) The connection determination unit 11B uses the wireless scheme that is specified by the series of wireless scheme specifying processing for determination whether the wireless terminal apparatus 10 establishes connection to the first wireless base station apparatus 20. Specifically, the reception speed measurement unit 11A notifies the connection determination unit 11B of the wireless scheme that is specified by the series of wireless scheme specifying processing. The connection determination unit 11B determines whether the data rate adapted to the notified wireless scheme is not less than a preset threshold of the data rate.

If it is determined that the data rate adapted to the specified wireless scheme is not less than the preset threshold, the connection determination unit 11B determines that the wireless terminal apparatus 10 establishes connection to the first wireless base station apparatus 20. The connection determination unit 11B instructs the first wireless communication processing unit 12 to connect the wireless terminal apparatus 10 to the first wireless base station apparatus 20. In contrast, if it is determined that the data rate adapted to the specified wireless scheme is less than the preset threshold, the connection determination unit 11B determines that the wireless terminal apparatus 10 does not establish connection to the first wireless base station apparatus 20, but the connection to the second wireless base station apparatus 40 is continued.

Moreover, when multiple wireless schemes corresponding to multiple first wireless base station apparatuses 20 are notified from the reception speed measurement unit 11A, the connection determination unit 11B specifies the wireless scheme not less than the preset threshold of the data rate, out of the notified multiple wireless schemes. The connection determination unit 11B then determines that the wireless terminal apparatus 10 establishes connection to the first wireless base station apparatus 20 that is adapted to the wireless scheme indicating the highest data rate, out of the specified wireless schemes.

The connection determination as described above is performed to allow the wireless terminal apparatus 10 to establish connection to the first wireless base station apparatus 20 with which the desired data rate may be acquired. Moreover, if the desired data rate may not be acquired, the wireless terminal apparatus 10 may continue the connection to the second wireless base station apparatus 40. In other words, if the wireless quality of a signal between the wireless terminal apparatus 10 and the first wireless base station apparatus 20 is low, the wireless terminal apparatus 10 does not establish connection to the first wireless base station apparatus 20, and accordingly keeps user throughput from lowering due to the connection to the first wireless base station apparatus 20.

(iii) The measurement of the data reception speed by wireless terminal apparatus 10 as in the foregoing may be executed not only before the wireless terminal apparatus 10 establishes connection to any first wireless base station apparatus 20, but also when the wireless terminal apparatus 10 establishes connection to an arbitrary first wireless base station apparatus 20. When the measurement of the data reception speed is executed when the wireless terminal apparatus 10 is being connected to the arbitrary first wireless base station apparatus 20, it can be said that the wireless terminal apparatus 10 is not connected to different wireless base station apparatuses 20 other than the first wireless base station apparatus 20 being connected.

For example, when a value of RSSI of a beacon signal received from the first wireless base station apparatus 20 to which the wireless terminal apparatus 10 is being connected becomes less than a predetermined threshold, the reception speed measurement unit 11A and the first wireless communication processing unit 12 perform scanning processing. The reception speed measurement unit 11A and the first wireless communication processing unit 12 then perform the data frame reception processing as illustrated in FIG. 7A and FIG. 7B. Moreover, the reception speed measurement unit 11A performs the wireless scheme specifying processing as illustrated in FIG. 8. The connection determination unit 11B then uses the wireless scheme specified by the wireless scheme specifying processing for determination whether the wireless terminal apparatus 10 establishes connection to a different first wireless base station apparatus 20 to which the wireless terminal apparatus 10 is not connected. The connection determination unit 11B determines whether the wireless terminal apparatus 10 establishes connection to the different first wireless base station apparatus 20 to which the wireless terminal apparatus 10 is not connected by processing similar to the processing described in the item (ii).

If the connection determination unit 11B determines that the wireless terminal apparatus 10 establishes connection to the different first wireless base station apparatus 20 to which the wireless terminal apparatus 10 is not connected, the first wireless communication processing unit 12 connects the wireless terminal apparatus 10 to different first wireless base station apparatus 20 to which the wireless terminal apparatus 10 is not connected, in accordance with an instruction by the connection determination unit 11B. The first wireless communication processing unit 12 then cuts off the connection to the first wireless base station apparatus 20 being connected.

The connection determination as described above is performed to allow the wireless terminal apparatus 10 to perform handover from the first wireless base station apparatus 20 to which the wireless terminal apparatus 10 has already been connected and with which the desired data rate may not be acquired to a different first wireless base station apparatus 20 to which the wireless terminal apparatus 10 is not connected and with which the desired data rate may be acquired.

<Second Embodiment>

In the first embodiment, the wireless terminal apparatus 10 specifies, as the data reception speed that is acquired when the wireless terminal apparatus 10 receives data from the first wireless base station apparatus 20, the wireless scheme that is applied when the wireless terminal apparatus 10 establishes connection to the first wireless base station apparatus 20. However, the data reception speed measured by the wireless terminal apparatus 10 may preferably be not limited to such a wireless scheme.

In a second embodiment, the wireless terminal apparatus 10 obtains an actual reception speed to which the congestion state of a wireless transmission channel (line) between the first wireless base station apparatus 20 and a wireless terminal apparatus having already been connected to the first wireless base station apparatus 20 is reflected. In a wireless LAN, for example, an access scheme such as Carrier Sense Multiple Access with Collision Avoidance (CSMA/CA) is used, and multiple wireless terminal apparatuses commonly use the same channel. In the second embodiment, the actual reception speed to which the congestion state of such a wireless transmission channel is reflected is used as the data reception speed that is acquired when the wireless terminal apparatus 10 receives data from the first wireless base station apparatus 20.

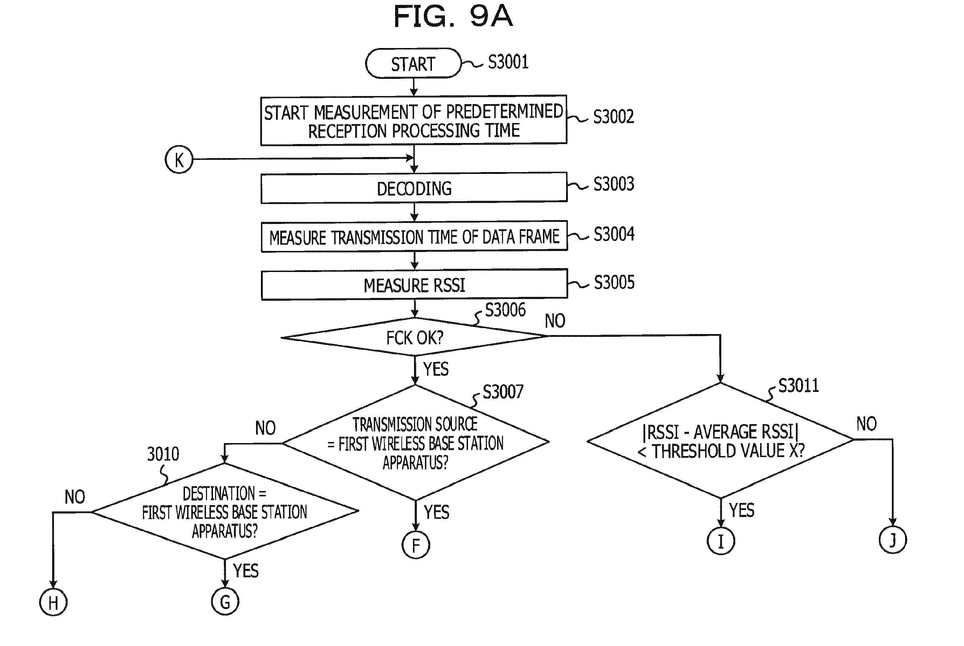

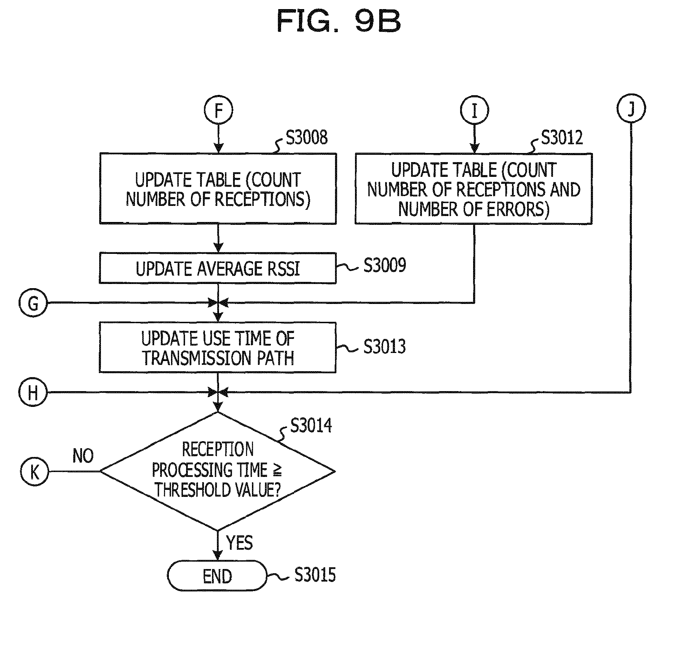

In the second embodiment, the wireless terminal apparatus 10 performs data frame reception processing as illustrated in FIG. 9A and FIG. 9B, instead of the data frame reception processing having been described in the foregoing with reference to FIG. 7A and FIG. 7B. FIG. 9A and FIG. 9B are exemplary flowcharts of data frame reception processing performed by a wireless terminal apparatus according to the second embodiment. Note that, processes included in the processing flows illustrated in FIG. 9A and FIG. 9B do not have to be separated temporally, but multiple processes may preferably be performed in parallel temporally.

As is understood by comparing FIG. 9A and FIG. 9B with FIG. 7A and FIG. 7B, in the second embodiment, the wireless terminal apparatus 10 performs processing similar to the data frame reception processing illustrated in FIG. 7A and FIG. 7B. In addition, in the second embodiment, the wireless terminal apparatus 10 measures a use time for the wireless transmission channel between the first wireless base station apparatus 20 and a wireless terminal apparatus having already been connected to the first wireless base station apparatus 20 during the data frame reception processing. Hereinafter, data frame reception processing illustrated in FIG. 9A and FIG. 9B will be specifically explained.

When the reception speed measurement unit 11A instructs the first wireless communication processing unit 12 to perform reception processing on the data frame 90, a series of data frame reception processing is started (Step S3001). The reception speed measurement unit 11A starts measurement of a predetermined reception processing time that is a repetition condition of the series of data frame reception processing between at Step S3003 and Step S3014 (Step S3002). Moreover, the reception speed measurement unit 11A sets "0" as an initial value of a use time for a wireless transmission channel between the first wireless base station apparatus 20 and the wireless terminal apparatus having already been connected to the first wireless base station apparatus 20. The initial value of the use time for the wireless transmission channel is set for every first wireless base station apparatus 20 the reception result record table 17A of which is created.

The first wireless communication processing unit 12 checks the Preamble 91 in the data frame 90 that is received via the first wireless communication interface 13, and performs synchronization processing on the data frame 90. The first wireless communication processing unit 12 then performs demodulation and decoding with respect to the DATA 93 that is transmission and reception target data, in accordance with the MCS indicated by the SIGNAL 92 in the data frame 90 (Step S3003).

The reception speed measurement unit 11A performs a process at Step S3004 during the reception (decoding) process with respect to the DATA 93 at Step S3003. In other words, the reception speed measurement unit 11A measures a transmission time for the data frame 90 that is transmitted on the wireless transmission channel between transmission and reception apparatuses of the data frame 90 (Step S3004). For example, the reception speed measurement unit 11A calculates a transmission time on the wireless transmission channel with respect to the data frame 90 using information included in the SIGNAL 92, information included in the Header 93A, and the like. The information included in the SIGNAL 92, for example, a data rate indicated by the MCS that is applied to the DATA 93, and a packet length (for example, LENGTH) of the DATA 93. The reception speed measurement unit 11A may calculate a transmission time for the Data 93 from the information included in the SIGNAL 92. Further, the Preamble 91 in the data frame 90 is, for example, a fixed time length such as 16 μs, and the SIGNAL 92 therein is, for example, a fixed time length such as 4 μs. Moreover, the information included in the Header 93A, for example, is a frame transmission prohibition period (for example, Network Allocation Vector (NAV)) indicated by a duration field in the Header 93A. The reception speed measurement unit 11A sums up such times to measure a transmission time on the wireless transmission channel with respect to the data frame 90.

The first wireless communication processing unit 12 then measures an RSSI when receiving the Preamble 91 in addition to the reception processing with respect to the DATA 93 at Step S3003 (Step S3005).

The first wireless communication processing unit 12 utilizes the FCS 93C in the DATA 93 to check whether an error occurs in transmission and reception target data, specifically, in the Header 93A and the Encrypted Data 93B (Step S3006). As a result of the error check, if it is checked that no error occurs in the transmission and reception target data ("YES" at Step S3006), the first wireless communication processing unit 12 checks a transmission source of the transmission and reception target data, from the information in the Header 93A (Step S3007).

As a result of the check of the transmission source, if it is checked that the transmission source of the transmission and reception target data is the first wireless base station apparatus 20 ("YES" at Step S3007), the first wireless communication processing unit 12 notifies the reception speed measurement unit 11A of the information acquired by the reception processing on the data frame 90. The information notified to the reception speed measurement unit 11A is the value of RSSI measured at Step S3005. Moreover, the information notified to the reception speed measurement unit 11A is information indicating a specific MCS that is applied to the transmission and reception target data, and information indicating that the transmission and reception target data is received without any error, and the transmission source of the transmission and reception target data, in other words, a specific first wireless base station apparatus 20. The reception speed measurement unit 11A receives the information notified from the first wireless communication processing unit 12.

The reception speed measurement unit 11A causes the received information to be reflected in the reception result record table 17A, and updates information to be recorded in the reception result record table 17A (Step S3008). Specifically, the reception speed measurement unit 11A increments the number of receptions of the MCS applied to the transmission and reception target data in the reception result record table 17A corresponding to the first wireless base station apparatus 20 that is the transmission source of the transmission and reception target data. Moreover, the reception speed measurement unit 11A recalculates the error rate with respect to the MCS applied to the transmission and reception target data in the reception result record table 17A corresponding to the first wireless base station apparatus 20 that is the transmission source of the transmission and reception target data. The reception speed measurement unit 11A records the recalculated error rate in association with the corresponding MCS in the reception result record table 17A.

The reception speed measurement unit 11A uses the value of RSSI notified from the first wireless communication processing unit 12 to update a value of average RSSI with respect to the data frame 90 transmitted from the first wireless base station apparatus 20 (Step S3009). The reception speed measurement unit 11A stores the updated value of average RSSI in association with the first wireless base station apparatus 20. When the process at Step S3009 is performed, the reception speed measurement unit 11A proceeds the processing to Step S3013.

In contrast, as a result of the check of the transmission source, if it is checked that the transmission source is not the first wireless base station apparatus 20 ("NO" at Step S3007), the first wireless communication processing unit 12 checks a transmission destination of the transmission and reception target data, from the information in the Header 93A (Step S3010).

As a result of the check of the transmission destination, if it is checked that the transmission destination is the first wireless base station apparatus 20 ("YES" at Step S3010), the first wireless communication processing unit 12 notifies the reception speed measurement unit 11A of the information acquired by the reception processing on the data frame 90. Specifically, the first wireless communication processing unit 12 notifies the reception speed measurement unit 11A that the transmission destination of the transmission and reception target data in the data frame 90 that is subjected to the reception processing is the first wireless base station apparatus 20. When the notification from the first wireless communication processing unit 12 is received, the reception speed measurement unit 11A proceeds the processing to Step S3013.

As a result of the check of the transmission destination, if it is checked that the transmission destination is not the first wireless base station apparatus 20 ("NO" at Step S3010), the first wireless communication processing unit 12 notifies the reception speed measurement unit 11A of the information acquired by the reception processing on the data frame 90. Specifically, the first wireless communication processing unit 12 notifies the reception speed measurement unit 11A that neither the transmission source nor the transmission destination of the data frame 90 that is subjected to the reception processing is the first wireless base station apparatus 20. When the notification from the first wireless communication processing unit 12 is received, the reception speed measurement unit 11A proceeds the processing to Step S3014.

Moreover, as a result of the error check, if it is checked that an error occurs in the transmission and reception target data ("NO" at Step S3006), the first wireless communication processing unit 12 notifies the reception speed measurement unit 11A of the information acquired by the reception processing on the data frame 90. The information notified to the reception speed measurement unit 11A is the value of RSSI measured at Step S3005. Moreover, the information notified to the reception speed measurement unit 11A is information indicating a specific MCS that is applied to the transmission and reception target data, and information indicating that the transmission and reception target data is received with an error. The reception speed measurement unit 11A receives the information notified from the first wireless communication processing unit 12.

The reception speed measurement unit 11A compares the received value of RSSI with the value of average RSSI that is held by the reception speed measurement unit 11A, and determines whether the transmission source is the first wireless base station apparatus 20 (Step S3011). Specifically, the reception speed measurement unit 11A calculates a difference between the measured RSSI and the value of average RSSI held by the reception speed measurement unit 11A, and determines whether the calculated difference is less than a predetermined threshold.

If it is determined that the calculated difference is less than the predetermined threshold ("YES" at Step S3011), the reception speed measurement unit 11A specifies that the transmission source of the transmission target data that is received with an error is the first wireless base station apparatus 20 that is adapted to the average RSSI used for the calculation of the difference. The reception speed measurement unit 11A then causes the information notified from the first wireless communication processing unit 12 to be reflected in the reception result record table 17A corresponding to the specified first wireless base station apparatus 20, and updates information to be recorded in the reception result record table 17A (Step S3012).

Specifically, the reception speed measurement unit 11A increments the number of receptions of the MCS applied to the transmission and reception target data in the reception result record table 17A corresponding to the first wireless base station apparatus 20 that is the transmission source of the transmission and reception target data. Moreover, the reception speed measurement unit 11A increments the number of errors with respect to the MCS applied to the transmission and reception target data in the reception result record table 17A corresponding to the first wireless base station apparatus 20 that is the transmission source of the transmission and reception target data. The reception speed measurement unit 11A uses the number of receptions and the number of errors that are updated to recalculate the error rate, and records the recalculated error rate in association with the corresponding MCS in the reception result record table 17A. When the process at Step S3012 is performed, the reception speed measurement unit 11A proceeds the processing to Step S3013.

At Step S3013, the reception speed measurement unit 11A performs a process below. The reception speed measurement unit 11A adds the transmission time for the data frame 90 that is measured at Step S3004 to the use time for the wireless transmission channel between the first wireless base station apparatus 20 that is specified as the transmission source of the transmission and reception target data and the wireless terminal apparatus having already been connected to the first wireless base station apparatus 20. The reception speed measurement unit 11A then proceeds the processing to Step S3014.

At Step S3014, the reception speed measurement unit 11A determines whether the reception processing time indicating the measurement time started at Step S3002 is not less than a predetermined time threshold.

If it is determined that the reception processing time is less than the predetermined time threshold ("NO" at Step S3014), the series of data frame reception processing is returned to Step S3003 and continued. The first wireless communication processing unit 12 performs reception processing at Step S3003 with respect to a newly received data frame 90.

In contrast, if it is determined that the reception processing time is not less than the predetermined time threshold ("YES" at Step S3014), the series of data frame reception processing is ended (Step S3015).

The reception speed measurement unit 11A uses the information in the reception result record table 17A that is recorded through the series of data frame reception processing as described above to specify the wireless scheme that is applied to data when the wireless terminal apparatus 10 receives the data from the first wireless base station apparatus 20. The specified wireless scheme may preferably an MCS in association with a specific data rate. The reception speed measurement unit 11A specifies the wireless scheme that is applied to data when the wireless terminal apparatus 10 receives the data from the first wireless base station apparatus 20 by wireless scheme specifying processing descried in the foregoing with reference to FIG. 8, for example.

Moreover, the reception speed measurement unit 11A uses the use time for the wireless transmission channel that is acquired through the series of data frame reception processing as described in the foregoing to calculate an activity ratio of the wireless transmission channel between the first wireless base station apparatus 20 and the wireless terminal apparatus having already been connected to the first wireless base station apparatus 20. An activity ratio Qu of the wireless transmission channel between the first wireless base station apparatus 20 and the wireless terminal apparatus having already been connected to the first wireless base station apparatus 20 is calculated by an expression (2) below.

$$Qu = Tu / Tp \dots (2)$$

In the expression (2), Tu represents a used time for the wireless transmission channel between the first wireless base station apparatus 20 and the wireless terminal apparatus having already been connected to the first wireless base station apparatus 20. Moreover, Tp represents a reception processing time for the data frame 90 that is set as a repetition condition, and a predetermined time threshold that is used in the determination process at Step S3014.

The reception speed measurement unit 11A calculates the ratio of free resources of the wireless transmission channel between the first wireless base station apparatus 20 and the wireless terminal apparatus having already been connected to the first wireless base station apparatus 20, from the calculated activity ratio Qu of the wireless transmission channel. The ratio of free resources Qnu of the wireless transmission channel is calculated by an expression (3) below.

$$Qnu = 1 - Qu \dots (3)$$

The reception speed measurement unit 11A calculates an actual reception speed of data when the wireless terminal apparatus 10 receives the data from the first wireless base station apparatus 20, from the calculated ratio of free resources Qnu of the wireless transmission channel and the data rate adapted to the wireless scheme that is specified by the wireless scheme specifying processing. An actual reception speed Rr of data is calculated by an expression (4) below.

$$Rr = R \cdot Qnu \dots (4)$$

R in the expression (4) represents the data rate adapted to the wireless scheme that is specified by the wireless scheme specifying processing. With the expression (4), may be acquired the data reception speed to which the congestion state of the wireless transmission channel between the first wireless base station apparatus 20 and the wireless terminal apparatus having already been connected to the first wireless base station apparatus 20 is reflected.

In this manner, the wireless terminal apparatus 10 according to the second embodiment obtains the actual reception speed Rr of data by the processing described in the foregoing, as a data reception speed that is acquired when the wireless terminal apparatus 10 receives the data from the first wireless base station apparatus 20. The data rate adapted to the wireless scheme that is specified by the wireless scheme specifying processing is a fixed value in theory and on the standard, but is not a value to which the congestion state of the wireless transmission channel between the first wireless base station apparatus 20 and a wireless terminal apparatus that establishes connection to the first wireless base station apparatus 20 is reflected. This may result in a significantly lower actual transmission speed that is acquired after the wireless terminal apparatus 10 establishes connection to the first wireless base station apparatus 20 than the data rate R corresponding to the wireless scheme that is specified by the wireless scheme specifying processing, if the large number of other wireless terminal apparatuses 80 have already been connected to the first wireless base station apparatus 20. The wireless terminal apparatus 10 according to the second embodiment may acquire the data reception speed to which the congestion state of the wireless transmission channel between the first wireless base station apparatus 20 and the wireless terminal apparatuses having been connected to the first wireless base station apparatus 20 is reflected.

Further, the data reception speed is measured, so that the wireless terminal apparatus 10 according to the second embodiment may also acquire an effect similar to the effect of the wireless terminal apparatus 10 according to the first embodiment described in the foregoing.

The data reception speed that is measured by the wireless terminal apparatus 10 according to the second embodiment, in other words, information on the actual reception speed of data when the wireless terminal apparatus 10 receives the data from the first wireless base station apparatus 20 may preferably be utilized in one or more processes described in items (A) to (D) below.

(A) The reception speed measurement unit 11A notifies the application unit 16 of information on the actual reception speed Rr of data, together with information on the first wireless base station apparatus 20. For example, when multiple actual reception speeds Rr corresponding to multiple first wireless base station apparatuses 20 are measured, the reception speed measurement unit 11A notifies the application unit 16 of the information on each of the first wireless base station apparatuses 20 in association with each of the actual reception speeds Rr. The application unit 16 displays the information related to the actual reception speed Rr of the data that is notified from the reception speed measurement unit 11A, together with information on the corresponding first wireless base station apparatus 20, for the user of the wireless terminal apparatus 10.

The display of the information as in the foregoing allows the user of the wireless terminal apparatus 10 to know the actual reception speed of the data that is acquired after the wireless terminal apparatus 10 establishes connection to the first wireless base station apparatus 20, and to determine whether the wireless terminal apparatus 10 establishes connection to the first wireless base station apparatus 20. Moreover, the user of the wireless terminal apparatus 10 may determine to which first wireless base station apparatus 20 the wireless terminal apparatus 10 establishes connection based on the displayed actual reception speed of the data. Alternatively, the user of the wireless terminal apparatus 10 may determine that wireless terminal apparatus 10 does not establish connection to the first wireless base station apparatus 20, but performs communication via connection to the second wireless base station apparatus 40, based on the displayed actual reception speed of the data.

(B) The connection determination unit 11B uses the measured actual reception speed Rr of data for determination whether the wireless terminal apparatus 10 establishes connection to the first wireless base station apparatus 20. Specifically, the reception speed measurement unit 11A notifies the connection determination unit 11B of the measured actual reception speed Rr of the data. The connection determination unit 11B determines whether the notified actual reception speed Rr is not less than a preset threshold of reception speed.

If it is determined that the notified actual reception speed Rr is not less than the preset threshold of reception speed, the connection determination unit 11B determines that the wireless terminal apparatus 10 establishes connection to the first wireless base station apparatus 20. The connection determination unit 11B then instructs the first wireless communication processing unit 12 to connect the wireless terminal apparatus 10 to the first wireless base station apparatus 20. In contrast, if it is determined that the notified actual reception speed Rr is less than the preset threshold of reception speed, the connection determination unit 11B determines that the wireless terminal apparatus 10 does not establish connection to the first wireless base station apparatus 20, but the connection to the second wireless base station apparatus 40 is continued.

Moreover, when multiple actual reception speeds Rr corresponding to multiple first wireless base station apparatuses 20 are measured, the connection determination unit 11B specifies the actual reception speed Rr not less than the preset threshold of reception speed, out of the measured multiple actual reception speeds Rr. The connection determination unit 11B then determines that the wireless terminal apparatus 10 establishes connection to the first wireless base station apparatus 20 adapted to the highest actual reception speed Rr, out of the specified actual reception speeds Rr.

The connection determination as described above is performed to allow the wireless terminal apparatus 10 to establish connection to the first wireless base station apparatus 20 with which the desired actual reception speed may be acquired. Moreover, if the desired actual reception speed may not be acquired, the wireless terminal apparatus 10 may continue the connection to the second wireless base station apparatus 40. In other words, if the wireless quality of a signal between the wireless terminal apparatus 10 and the first wireless base station apparatus 20 is low, the wireless terminal apparatus 10 does not establish connection to the first wireless base station apparatus 20, and accordingly keeps user throughput from lowering due to the connection to the first wireless base station apparatus 20.

(C) The reception speed measurement unit 11A measures the reception speed of data that the second wireless communication processing unit 14 receives from the second wireless base station apparatus 40 to which the wireless terminal apparatus 10 is being connected, via the second wireless communication interface 15. The connection determination unit 11B compares the measured actual reception speed Rr of the data with the reception speed of the data received from the second wireless base station apparatus 40. If the measured actual reception speed Rr of the data is not less than the reception speed of the data received from the second wireless base station apparatus 40, the connection determination unit 11B determines that the wireless terminal apparatus 10 establishes connection to the first wireless base station apparatus 20. The connection determination unit 11B then instructs the first wireless communication processing unit 12 to connect the wireless terminal apparatus 10 to the first wireless base station apparatus 20. In contrast, the measured actual reception speed Rr of the data is less than the reception speed of the data received from the second wireless base station apparatus 40, the connection determination unit 11B determines that the connection to the second wireless base station apparatus 40 is continued.

The process as described above allows the wireless terminal apparatus 10 to receive data transmitted from the Internet 60 via a wireless communication system at the faster data reception speed, out of the first wireless communication system S1 and the second wireless communication system S2.

(D) The reception speed measurement unit 11A and the first wireless communication processing unit 12 perform scanning processing when a value of RSSI of a beacon signal received from the first wireless base station apparatus 20 to which the wireless terminal apparatus 10 is being connected becomes less than a predetermined threshold. The reception speed measurement unit 11A and the first wireless communication processing unit 12 then perform the data frame reception processing as illustrated in FIG. 9A and FIG. 9B. Moreover, the reception speed measurement unit 11A performs the wireless scheme specifying processing as illustrated in FIG. 8. The reception speed measurement unit 11A then obtains the actual reception speed Rr of data that is obtained after the wireless terminal apparatus 10 establishes connection to the first wireless base station apparatus 20, using the expression (2) to the expression (4) described in the foregoing. The connection determination unit 11B uses the obtained actual reception speed Rr of data for determination whether the wireless terminal apparatus 10 establishes connection to a different first wireless base station apparatus 20 to which the wireless terminal apparatus 10 is not connected. The connection determination unit 11B determines whether the wireless terminal apparatus 10 establishes connection to the different first wireless base station apparatus 20 to which the wireless terminal apparatus 10 is not connected by processing similar to the processing described in the item (B).

If the connection determination unit 11B determines that the wireless terminal apparatus 10 establishes connection to the different first wireless base station apparatus 20 to which the wireless terminal apparatus 10 is not connected, the first wireless communication processing unit 12 connects the wireless terminal apparatus 10 to the different first wireless base station apparatus 20 to which the wireless terminal apparatus 10 is not connected, in accordance with an instruction by the connection determination unit 11B. The first wireless communication processing unit 12 then cuts off the connection to the first wireless base station apparatus 20 being connected.

The connection determination as described above is performed to allow the wireless terminal apparatus 10 to perform handover from the first wireless base station apparatus 20 to which the wireless terminal apparatus 10 has already been connected and with which the desired actual reception speed may not be acquired to a different first wireless base station apparatus 20 to which the wireless terminal apparatus 10 is not connected and with which the desired actual reception speed may be acquired.

<Third Embodiment>

As described in the foregoing with reference to FIG. 1 and FIG. 2, the wireless terminal apparatus 10 is a wireless terminal apparatus including a wireless communication module adapted to the first wireless communication system S1, and a wireless communication module adapted to the second wireless communication system S2. Meanwhile, the wireless terminal apparatus that obtains the data reception speed by the processing in accordance with the first embodiment or the second embodiment may preferably not include the wireless communication module adapted to the second wireless communication system S2.

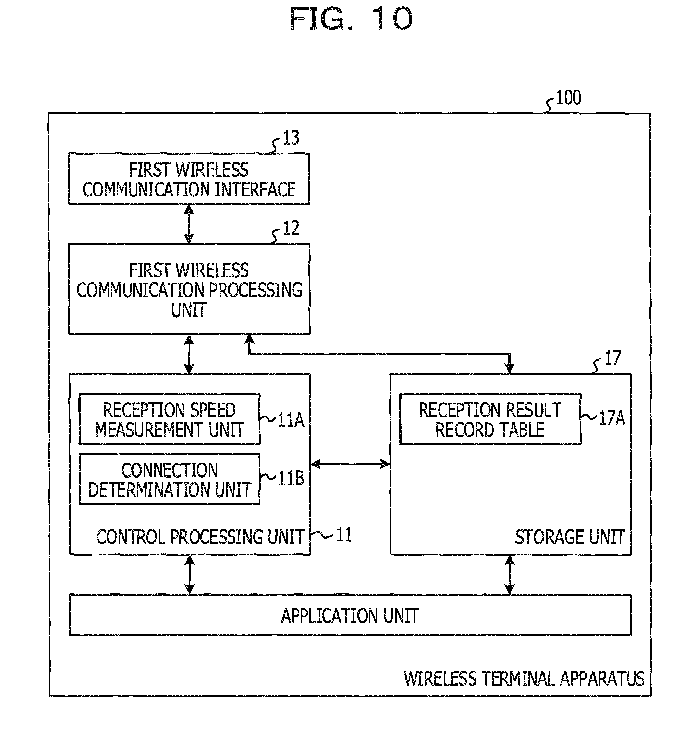

FIG. 10 is an exemplary functional block diagram of a wireless terminal apparatus according to a third embodiment. In FIG. 10, the same components included in the wireless terminal apparatus 10 illustrated in FIG. 2 are assigned with the same reference numerals. As illustrated in FIG. 10, a wireless terminal apparatus 100 includes the control processing unit 11, the first wireless communication processing unit 12, the first wireless communication interface 13, the application unit 16, and the storage unit 17. The control processing unit 11 includes the reception speed measurement unit 11A and the connection determination unit 11B. The storage unit 17 includes the reception result record table 17A. These components included in the wireless terminal apparatus 100 are the same as the components included in the wireless terminal apparatus 10. However, the wireless terminal apparatus 100 does not include the wireless communication modules adapted to the second wireless communication system S2, in other words, the second wireless communication processing unit 14 and the second wireless communication interface 15, which are included in the wireless terminal apparatus 10.

The wireless terminal apparatus 100 may measure the data reception speed that is acquired when the wireless terminal apparatus 100 receives data from the first wireless base station apparatus 20, by the processing in accordance with the first embodiment or the second embodiment. Moreover, the data reception speed measured in accordance with the first embodiment or the second embodiment may be used to the processing similar to the processing in accordance with the first embodiment or the second embodiment, except that connection to the second wireless base station apparatus 40 doesn't start or continue.

The third embodiment allows the data reception speed when the wireless terminal apparatus receives data from the first wireless base station apparatus to be obtained with a simple apparatus configuration in which no wireless communication module adapted to the second wireless communication system is provided. Moreover, the data reception speed that is obtained for determination whether the wireless terminal apparatus establishes connection to the first wireless base station apparatus may be utilized with a simple apparatus configuration in which no wireless communication module adapted to the second wireless communication system is provided.

**Claims**

1. A wireless terminal apparatus comprising:

a control processing unit configured to:

when the wireless terminal has not established a connection to a wireless base station, receive at least one radio frame that is transmitted from the wireless base station to another wireless terminal, and estimate a specified parameter indicating a reception data rate on an assumption that the wireless terminal has established a connection to the wireless base station, based on whether each of the at least one radio frame includes a reception error.

2. The wireless terminal apparatus according to claim 1, wherein
the control processing unit is configured to:

estimate each reception error rate for each wireless communication scheme based on whether each of the at least one radio frame includes a reception error, each wireless communication scheme being defined by each combination of one of modulation schemes and one of coding rate, and
estimate the specified parameter based on each wireless communication scheme corresponding to each reception error rate that is lower than a first threshold value.

3. The wireless terminal apparatus according to claim 2, wherein
the control processing unit is configured to:

measure a first length of a period when a channel is free and a second length of a period when the channel is used, the channel being shared among the wireless base station and wireless terminals including the wireless terminal and the other wireless terminal, and
estimate the specified parameter being the reception data rate further based on the first length and the second length.

4. The wireless terminal apparatus according to any preceding claim, wherein
the control processing unit is configured to determine to establish a connection to the wireless base station when the specified parameter indicates that the reception data rate is more than a second threshold value.

5. The wireless terminal apparatus according to any preceding claim, wherein
the control processing unit is configured to receive the at least one radio frame when the wireless terminal has established a connection to another wireless base station and when the wireless terminal measures a received strength from the other wireless base station that is lower than a third threshold value.

6. The wireless terminal apparatus according to claim 5, wherein
the wireless base station is included in a first wireless communication system, and
the other wireless base station is included in a second wireless communication system that is different from the first wireless communication system.

7. The wireless terminal apparatus according to any preceding claim, further comprising:

an output device, wherein
the control processing unit is configured to output the specified parameter to the output device.

8. The wireless terminal apparatus according to any preceding claim, wherein
each of the at least one radio frame includes each control signal and each data unit,
each control signal includes each wireless communication scheme defined by each combination of one of modulation schemes and one of coding rate, and
each data unit includes each check sequence for detecting each reception error of each of the at least one radio frame.

9. A wireless communication method comprising:

when the wireless terminal has not established a connection to a wireless base station, receiving at least one radio frame that is transmitted from the wireless base station to another wireless terminal; and
estimating a specified parameter indicating a reception data rate on an assumption that the wireless terminal has established a connection to the wireless base station, based on whether each of the at least one radio frame includes a reception error.

10. A computer program containing program code which, when executed by a wireless terminal apparatus, causes the wireless terminal apparatus to perform the method of claim 9.

**11.** A computer-readable storage medium storing therein a computer program according to claim 10.

# FIG. 1

EP 2 999 273 A1

# FIG. 2

```
                                                                        ┌ 10

┌──────────────────────────────────────────────────────────────────────────┐
│                                                                            │
│   ┌ 13                                  ┌ 15                                │
│  ┌─────────────────────────┐         ┌─────────────────────────┐           │
│  │   FIRST WIRELESS        │         │   SECOND WIRELESS       │           │
│  │ COMMUNICATION INTERFACE │         │ COMMUNICATION INTERFACE │           │
│  └─────────────────────────┘         └─────────────────────────┘           │
│             ↕                                   ↕                           │
│   ┌ 12                                  ┌ 14                                │
│  ┌─────────────────────────┐         ┌─────────────────────────┐           │
│  │   FIRST WIRELESS        │         │   SECOND WIRELESS       │           │
│  │ COMMUNICATION PROCESSING│         │ COMMUNICATION PROCESSING│           │
│  │        UNIT             │         │        UNIT             │           │
│  └─────────────────────────┘         └─────────────────────────┘           │
│                                                                            │
│                                                         ┌ 17                │
│  ┌──────────────────────────┐        ┌──────────────────────────┐          │
│  │ ┌──────────────────────┐ │        │ ┌──────────────────────┐ │          │
│  │ │ RECEPTION SPEED      │~11A       │ │ RECEPTION RESULT     │~17A       │
│  │ │ MEASUREMENT UNIT     │ │        │ │ RECORD TABLE         │ │          │
│  │ └──────────────────────┘ │        │ └──────────────────────┘ │          │
│  │ ┌──────────────────────┐ │   ↔    │                          │          │
│  │ │ CONNECTION           │~11B       │                          │          │
│  │ │ DETERMINATION UNIT   │ │        │                          │          │
│  │ └──────────────────────┘ │        │                          │          │
│  │ CONTROL PROCESSING UNIT│~11        │              STORAGE UNIT│          │
│  └──────────────────────────┘        └──────────────────────────┘          │
│             ↕                                   ↕                           │
│  ┌──────────────────────────────────────────────────────────────┐         │
│  │                    APPLICATION UNIT                            │         │
│  └──────────────────────────────────────────────────────────────┘         │
│                                                                            │
│                                            WIRELESS TERMINAL APPARATUS      │
└────────────────────────────────────────────────────────────────────────────┘
```

# FIG. 3

70

71
PROCESSOR

72
STORAGE DEVICE

76

73
INPUT DEVICE

74
OUTPUT DEVICE

75
COMMUNICATION INTERFACE

# FIG. 4

FIRST WIRELESS BASE
STATION APPARATUS

OTHER WIRELESS
TERMINAL APPARATUS 80

WIRELESS TERMINAL
APPARATUS

20

80A   80B

10

DATA Da1

DATA Db1

DATA Da2

DATA Db2

DATA Dc

DATA Dd

# FIG. 5

# FIG. 6

17A

| MCS | NUMBER OF RECEPTIONS | NUMBER OF ERRORS | ERROR RATE |
|------|------|------|------|
| 54Mbps | 0 | 0 | 0 |
| 48Mbps | 0 | 0 | 0 |
| 36Mbps | 0 | 0 | 0 |
| 24Mbps | 0 | 0 | 0 |
| 12Mbps | 0 | 0 | 0 |
| 6Mbps | 0 | 0 | 0 |

# FIG. 7A

```
                    ( START )  ‿ S1001
                        │
                        ▼
        ┌──────────────────────────────┐
        │ START REPETITION CONDITION   │ ‿ S1002
        └──────────────────────────────┘
                        │
   (E) ──────────────►  ▼
        ┌──────────────────────────────┐
        │          DECODING            │ ‿ S1003
        └──────────────────────────────┘
                        │
                        ▼
        ┌──────────────────────────────┐
        │         MEASURE RSSI         │ ‿ S1004
        └──────────────────────────────┘
                        │
                        ▼         ⌒ S1005
                    ╱─────────╲           NO
                  ╱   FCK OK?   ╲ ─────────────────┐
                    ╲─────────╱                    │
                        │ YES                       │
                        ▼      ⌒ S1006             ▼      ⌒ S1009
         NO       ╱──────────────╲         ╱──────────────────╲        NO
     ┌──────────╱  TRANSMISSION   ╲       ╱ |RSSI - AVERAGE RSSI| ╲ ────────┐
     │          ╲ SOURCE = FIRST   ╱      ╲  THRESHOLD VALUE X?   ╱         │
     │          ╲ WIRELESS BASE   ╱        ╲──────────────────╱            │
     │          ╲ STATION         ╱             │ YES                       │
     │          ╲ APPARATUS?     ╱              ▼                           │
     │            ╲──────────╱                 (C)                         ▼
     │                │ YES                                                (D)
     ▼                ▼
    (B)              (A)
```

EP 2 999 273 A1

# FIG. 7B

# FIG. 8

```
            ( START )～ S2001
                  │
    ╱ DESCENDING ORDER OF MCS ╲～ S2002
                  │
                  │        S2003
                  ▼
  NO      ╱ NUMBER OF ╲
◄─────────  RECEPTIONS ≥ N?
         ╲            ╱
              │ YES
              │      S2004
              ▼
         ╱ ERROR RATE < E? ╲──── YES ────┐
         ╲                ╱               │
              │ NO                        │
              │   S2006                   │  S2005
              ▼                           ▼
   ╱                    ╲      │ SPECIFY DETERMINED MCS │
   ╲                    ╱      └───────────┬────────────┘
              │                            │
              ▼◄──────────────────────────┘
         ( END )～ S2007
```

# FIG. 9A

START ～ S3001

START MEASUREMENT OF PREDETERMINED RECEPTION PROCESSING TIME ～ S3002

(K) →

DECODING ～ S3003

MEASURE TRANSMISSION TIME OF DATA FRAME ～ S3004

MEASURE RSSI ～ S3005

FCK OK? S3006 — NO

YES

TRANSMISSION SOURCE = FIRST WIRELESS BASE STATION APPARATUS? S3007

NO

DESTINATION = FIRST WIRELESS BASE STATION APPARATUS? 3010

NO

(H)

YES

(G)

YES

(F)

|RSSI - AVERAGE RSSI| < THRESHOLD VALUE X? S3011

NO

YES

(I)

(J)

EP 2 999 273 A1

# FIG. 9B

```
        (F)                          (I)                    (J)
         │                            │
         │         S3008              │        S3012
         ▼                            ▼
┌──────────────────────┐   ┌──────────────────────────┐
│   UPDATE TABLE (COUNT │   │   UPDATE TABLE (COUNT     │
│   NUMBER OF RECEPTIONS)│  │ NUMBER OF RECEPTIONS AND  │
└──────────────────────┘   │   NUMBER OF ERRORS)       │
         │                 └──────────────────────────┘
         ▼                            │
┌──────────────────────┐  S3009       │
│   UPDATE AVERAGE RSSI │              │
└──────────────────────┘              │
(G)──────────────►│◄─────────────────┘
         ▼
┌──────────────────────┐
│   UPDATE USE TIME OF  │  S3013
│   TRANSMISSION PATH   │
└──────────────────────┘
(H)──────────────►│◄──────────────────────────────┘
                  ▼
                S3014
         ╱────────────────╲
  NO    │    RECEPTION     │
(K)─────│ PROCESSING TIME ≧│
         │ THRESHOLD VALUE? │
         ╲────────────────╱
                  │ YES
                  ▼
            ┌──────────┐
            │   END    │  S3015
            └──────────┘
```

# FIG. 10

**EUROPEAN SEARCH REPORT**

Application Number

EP 15 18 4898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/218568 A1 (GOODALL DAVID S [AU] ET AL) 4 November 2004 (2004-11-04)<br>* abstract *<br>* paragraph [0002] - paragraph [0017] *<br>* paragraphs [0073], [0077] - [0085] *<br>* paragraph [0093] - paragraph [0104] *<br>* paragraph [0131] - paragraph [0139] *<br>----- | 1-11 | INV.<br>H04W48/20<br><br>ADD.<br>H04W88/06 |
| X<br><br>A | WO 01/99385 A2 (QUALCOMM INC [US])<br>27 December 2001 (2001-12-27)<br>* abstract *<br>* page 7, line 30 - page 9, line 11 *<br>* page 16, line 45 - page 17, line 7 *<br>----- | 1,9-11<br><br>2-8 | |
| X<br><br>A | EP 1 564 912 A1 (MATSUSHITA ELECTRIC IND CO LTD [JP]) 17 August 2005 (2005-08-17)<br>* abstract *<br>* paragraph [0011] *<br>* paragraph [0026] - paragraph [0031] *<br>* paragraphs [0036], [0043] *<br>* paragraph [0058] - paragraph [0063] *<br>----- | 1,9-11<br><br>2-8 | |
| A | US 8 705 460 B1 (CHOI JIHWAN P [US] ET AL) 22 April 2014 (2014-04-22)<br>* abstract *<br>* column 2, line 17 - line 28 *<br>* column 3, line 21 - line 36 *<br>* column 4, line 4 - line 18 *<br>* column 6, line 13 - line 26 *<br>* column 7, line 43 - column 10, line 14 *<br>----- | 1-11 | TECHNICAL FIELDS SEARCHED (IPC)<br><br>H04W |
| A | US 2012/063439 A1 (SEOK YONG HO [KR])<br>15 March 2012 (2012-03-15)<br>* abstract *<br>* paragraphs [0015] - [0018], [0036] *<br>* paragraph [0051] - paragraph [0075] *<br>-----<br>-/-- | 1-11 | |

The present search report has been drawn up for all claims

| Place of search | Date of completion of the search | Examiner |
|---|---|---|
| Munich | 25 January 2016 | Aulló Navarro, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 15 18 4898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 781 005 A1 (SYMBOL TECHNOLOGIES INC [US]) 25 June 1997 (1997-06-25)<br>* abstract *<br>* column 2, line 50 - column 4, line 39 *<br>* column 7, line 51 - column 8, line 56 *<br>----- | 1-11 | |

TECHNICAL FIELDS
SEARCHED    (IPC)

The present search report has been drawn up for all claims

| Place of search | Date of completion of the search | Examiner |
|---|---|---|
| Munich | 25 January 2016 | Aulló Navarro, A |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 15 18 4898

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2016

| Patent document cited in search report | | Publication date | Patent family member(s) | | Publication date |
|---|---|---|---|---|---|
| US 2004218568 | A1 | 04-11-2004 | AT | 461568 T | 15-04-2010 |
| | | | AU | 2004307921 A1 | 19-05-2005 |
| | | | CA | 2543477 A1 | 19-05-2005 |
| | | | CN | 1875644 A | 06-12-2006 |
| | | | EP | 1687939 A1 | 09-08-2006 |
| | | | JP | 4312798 B2 | 12-08-2009 |
| | | | JP | 2007510358 A | 19-04-2007 |
| | | | US | 2004218568 A1 | 04-11-2004 |
| | | | US | 2005249129 A1 | 10-11-2005 |
| | | | US | 2008266160 A1 | 30-10-2008 |
| | | | WO | 2005046267 A1 | 19-05-2005 |
| WO 0199385 | A2 | 27-12-2001 | AU | 7202001 A | 02-01-2002 |
| | | | BR | 0111777 A | 30-03-2004 |
| | | | CN | 1528064 A | 08-09-2004 |
| | | | EP | 1302010 A2 | 16-04-2003 |
| | | | HK | 1066356 A1 | 28-09-2007 |
| | | | JP | 2004507132 A | 04-03-2004 |
| | | | KR | 20030011913 A | 11-02-2003 |
| | | | TW | 518846 B | 21-01-2003 |
| | | | US | 6760313 B1 | 06-07-2004 |
| | | | US | 2004202196 A1 | 14-10-2004 |
| | | | WO | 0199385 A2 | 27-12-2001 |
| EP 1564912 | A1 | 17-08-2005 | AU | 2003292639 A1 | 22-07-2004 |
| | | | CN | 1732639 A | 08-02-2006 |
| | | | EP | 1564912 A1 | 17-08-2005 |
| | | | JP | 4167485 B2 | 15-10-2008 |
| | | | JP | 2004208197 A | 22-07-2004 |
| | | | US | 2006058054 A1 | 16-03-2006 |
| | | | WO | 2004059884 A1 | 15-07-2004 |
| US 8705460 | B1 | 22-04-2014 | US | 8705460 B1 | 22-04-2014 |
| | | | US | 8982828 B1 | 17-03-2015 |
| US 2012063439 | A1 | 15-03-2012 | AU | 2009348527 A1 | 02-02-2012 |
| | | | CA | 2766526 A1 | 29-12-2010 |
| | | | CN | 102804637 A | 28-11-2012 |
| | | | EP | 2446553 A1 | 02-05-2012 |
| | | | JP | 5642169 B2 | 17-12-2014 |
| | | | JP | 2012531793 A | 10-12-2012 |
| | | | KR | 20100138692 A | 31-12-2010 |
| | | | RU | 2012102023 A | 27-07-2013 |
| | | | US | 2012063439 A1 | 15-03-2012 |
| | | | US | 2014098698 A1 | 10-04-2014 |
| | | | US | 2014105200 A1 | 17-04-2014 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 15 18 4898

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2016

| Patent document cited in search report | | Publication date | Patent family member(s) | | Publication date |
|---|---|---|---|---|---|
| | | | US 2015188686 A1 | | 02-07-2015 |
| | | | WO 2010150950 A1 | | 29-12-2010 |
| EP 0781005 | A1 | 25-06-1997 | AT | 415027 T | 15-12-2008 |
| | | | CA | 2186923 A1 | 28-04-1997 |
| | | | EP | 0781005 A1 | 25-06-1997 |
| | | | JP | 4418537 B2 | 17-02-2010 |
| | | | JP | H09215044 A | 15-08-1997 |
| | | | US | 5815811 A | 29-09-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005039571 A
- JP 2007510358 A
- JP 2012531793 A
- WO 2008020536 A